# EUROPEAN PATENT APPLICATION

(11) **EP 4 815 534 A1**
(43) Date of publication of application: **30.09.2026**
(21) Application number: 24936336.7
(22) Date of filing: 24.04.2024
(51) Int. Cl.: H04W 12/06, H04W 12/03

(54) **COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: XIONG, Lihui, Dongguan, Guangdong 523860 (CN); GAN, Lu, Dongguan, Guangdong 523860 (CN); LI, Meng, Dongguan, Guangdong 523860 (CN)
(74) Representative: Mewburn Ellis LLP
(86) International application number: PCT/CN2024/089666
(87) International publication number: WO 2025/222421

(57) **Abstract**

A communication method and a device are provided in the disclosure. The method includes the following. A first request is received. The first request is used by a first ambient power-enabled internet of things (AIoT) device to determine a reported device identity (ID). A first response is sent. The first response carries a protected ID of the first AIoT device. The first response is used by an AIoT network function (NF) to determine to trigger an AIoT authentication function to perform authentication with the first AIoT device.

## Description

### TECHNICAL FIELD

This disclosure relates to the field of communication, and more particularly, to a communication method and a device.

### BACKGROUND

With the development of technology, ambient power-enabled internet of things (AIoT) devices also have a demand to access communication systems or communication networks for data interaction, which requires the AIoT device to first perform authentication with the network. However, the AIoT device is characterized by not actively sending messages, etc., so that the AIoT device is unable to actively perform an authentication procedure. Therefore, how to design an authentication procedure that better adapts to characteristics of the AIoT device has become an urgent problem to be solved.

### SUMMARY

A communication method and a device are provided in embodiments of the disclosure.

A communication method performed by a first ambient power-enabled internet of things (AIoT) device is provided in embodiments of the disclosure. The method includes the following. A first request is received. The first request is used by the first AIoT device to determine a reporting device identity (ID). A first response is sent. The first response carries a protected ID of the first AIoT device. The first response is used by an AIoT network function (NF) to determine to trigger an AIoT authentication function to perform authentication with the first AIoT device.

A communication method performed by an AIoT NF is provided in embodiments of the disclosure. The method includes the following. A first request is sent. The first request is used by a first AIoT device to determine a reporting device ID. A first response is received. The first response carries a protected ID of the first AIoT device. The first response is used to determine to trigger an AIoT authentication function to perform authentication with the first AIoT device.

A communication method performed by an AIoT authentication function is provided in embodiments of the disclosure. The method includes the following. An authentication request is received from an AIoT NF. The authentication request is used to trigger authentication between the AIoT authentication function and a first AIoT device.

A first AIoT device is provided in embodiments of the disclosure. The first AIoT device includes a first communication unit. The first communication unit is configured to receive a first request. The first request is used by the first AIoT device to determine a reporting device ID. The first communication unit is configured to send a first response. The first response carries a protected ID of the first AIoT device. The first response is used by an AIoT NF to determine to trigger an AIoT authentication function to perform authentication with the first AIoT device.

An AIoT NF is provided in embodiments of the disclosure. The AIoT NF includes a second communication unit. The second communication unit is configured to send a first request. The first request is used by a first AIoT device to determine a reporting device ID. The second communication unit is configured to receive a first response. The first response carries a protected ID of the first AIoT device. The first response is used to determine to trigger an AIoT authentication function to perform authentication with the first AIoT device.

An AIoT authentication function is provided in embodiments of the disclosure. The AIoT authentication function includes a third communication unit. The third communication unit is configured to receive an authentication request from an AIoT NF. The authentication request is used to trigger authentication between the AIoT authentication function and a first AIoT device.

By adopting the above solutions, when the first AIoT device receives a request requiring ID reporting, the first AIoT device reports a protected ID, so that the AIoT NF on a network side triggers the AIoT authentication function to perform authentication with the first AIoT device. In this way, the authentication procedure can be better adapted to a type of AIoT device that has a lower capability and does not actively send data.

### BRIEF DESCRIPTION OF THE DRAWINGS

FIG. 1 is a schematic diagram of an application scenario according to embodiments of the disclosure.
FIG. 2 is a schematic flow chart of a communication method according to an embodiment of the disclosure.
FIG. 3 is a schematic flow chart of a communication method according to another embodiment of the disclosure.
FIG. 4 is a schematic flow chart of a communication method according to yet another embodiment of the disclosure.
FIG. 5 is a schematic diagram of a permanent identity (ID) of a first ambient power-enabled internet of things (AIoT) device according to an embodiment of the disclosure.
FIG. 6 is a schematic diagram of an encrypted permanent ID of a first AIoT device according to an embodiment of the disclosure.
FIG. 7 is a schematic architectural diagram illustrating key derivation according to an embodiment of the disclosure.
FIG. 8 and FIG. 9 are two schematic flow charts of communication methods according to an embodiment of the disclosure.
FIG. 10 is a schematic block diagram of a first AIoT device according to an embodiment of the disclosure.
FIG. 11 is a schematic block diagram of an AIoT network function (NF) according to an embodiment of the disclosure.
FIG. 12 is a schematic block diagram of an AIoT authentication function according to an embodiment of the disclosure.

### DETAILED DESCRIPTION

The technical solutions of embodiments of the disclosure are applicable to various communication systems, for example, a long term evolution (LTE), an advanced LTE (LTE-A) system, a new radio (NR) system, an evolved system of an NR system, a wireless local area network (WLAN), a wireless fidelity (WiFi), or other communication systems, etc.

Various embodiments of the disclosure are described in connection with a network device and a terminal. The terminal may be mobile or may be stationary. The terminal may also be referred to as a mobile station, a subscriber unit, etc. The terminal may be a station (ST) in a WLAN, or may be a terminal such as smart terminal, a wireless modem, a laptop computer, a tablet computer, etc. In embodiments of the disclosure, the terminal may be a virtual reality (VR) terminal/an augmented reality (AR) terminal, a terminal in industrial control, a terminal in self-driving, a terminal in remote medical, a terminal in smart grid, a terminal in transportation safety, a terminal in smart city, or a wireless terminal in smart home, etc. By way of explanation rather than limitation, in embodiments of the disclosure, the terminal may also be a wearable device.

In embodiments of the disclosure, the network device may be a device configured to communicate with the terminal. The network device may be an access point (AP) in a WLAN, an evolutional Node B (eNB or eNodeB) in an LTE, or a relay station, or an in-vehicle device, a wearable device, and a network device (gNB) in an NR network, or a network device in a future evolved public land mobile network (PLMN) network, or a network device in a non-terrestrial network (NTN), etc. By way of explanation rather than limitation, in embodiments of the disclosure, the network device may be mobile, for example, the network device may be a mobile device.

For a better understanding of the technical solutions of embodiments of the disclosure, the related art of embodiments of the disclosure will be described below. The following related art, as an optional scheme, may be arbitrarily combined with the technical solutions of embodiments of the disclosure, which shall fall within the protection scope of embodiments of the disclosure.

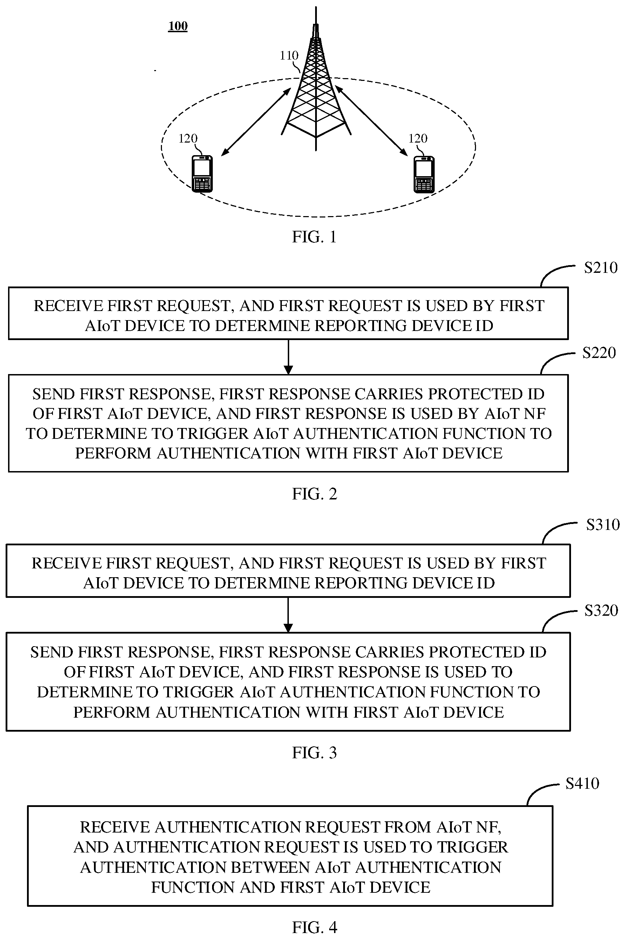

FIG. 1 exemplarily illustrates a communication system 100. The communication system includes a network device 110 and two terminals 120. In one possible implementation, the communication system 100 may include multiple network devices 110, and there can be other quantities of terminals 120 in a coverage area of each of the network devices 110. Embodiments of the disclosure are not limited in this regard. In one possible implementation, the communication system 100 may further include other network entities such as a mobility management entity, an access and mobility management function, etc. Embodiments of the disclosure are not limited in this regard. The network device may further include an access network device and a core network device. That is, the communication system may further include multiple core networks that are configured to communicate with the access network device. The access network device may be a base station of an LTE system, an LTE-A system, or an NR system. Taking the communication system illustrated in FIG. 1 as an example, the communication device may include a network device and a terminal that have communication functions. The communication device may further include other devices such as a network controller, a mobile management entity, or other network entities in the communication system. Embodiments of the disclosure are not limited in this regard.

In the related art, objectives for designing an ambient power-enabled internet of things (AIoT) device are respectively provided as follows.

Target power consumption includes two categories: ~1 µW peak power consumption, and ≤ a few hundred µW peak power consumption. For ~1 µW peak power consumption, the AIoT device has an energy storage function and an initial sampling frequency offset (SFO) up to 10^{X} ppm. There is neither downlink (DL) amplification nor uplink (UL) amplification in the device, and UL transmission of the AIoT device is backscattered on a carrier wave provided externally. For ≤ a few hundred µW peak power consumption, the AIoT device has an energy storage function and an initial SFO up to 10^{X} ppm. There are both DL amplification and UL amplification in the device, and UL transmission of the AIoT device may be generated internally by the device, or may be backscattered on a carrier wave provided externally.

A network topology includes Topology 1 and Topology 2. Topology 1: base station (BS) ↔ AIoT device. That is, the AIoT device directly performs two-way communication with the BS, and the communication between the BS and the AIoT device includes AIoT data communication and/or signal communication. Topology 2: BS ↔ intermediate node ↔ AIoT device. That is, the AIoT device performs two-way communication with the intermediate node. The intermediate node may be a relay, an integrated access and backhaul (IAB) node, a user equipment (UE), a repeater, etc. The intermediate node transmits AIoT (or A-IoT) data and/or signaling between the BS and the AIoT device. Herein, Topology 1 is combined with deployment scenario 1, that is, the AIoT device is indoor and the base station refers to a micro base station; and Topology 2 is combined with deployment scenario 2, that is, the AIoT device is indoor, the UE is indoor, the UE serves as an intermediate node under network control, and the base station refers to a macro base station.

Transmission modes include two types: device-originated - device-terminated triggered (DO-DTT) transmission and device-terminated (DT) transmission. DT transmission refers to that a signal is terminated at the AIoT device, which is applicable to an indoor-command service scenario, that is, a command message is sent to the AIoT device. DO-DTT transmission refers to that a signal sent by the device is triggered by a signal terminated at the device, which is applicable to an indoor-inventory service scenario.

Service procedures may include a command procedure, an inventory procedure, etc.

FIG. 2 is a schematic flow chart of a communication method performed by a first AIoT device according to an embodiment of the disclosure. The method includes at least a part of the following.

In S210, a first request is received. The first request is used by the first AIoT device to determine a reporting device identity (ID).

In S220, a first response is sent. The first response carries a protected ID of the first AIoT device. The first response is used by an AIoT network function (NF) to determine to trigger an AIoT authentication function to perform authentication with the first AIoT device.

FIG. 3 is a schematic flow chart of a communication method performed by an AIoT NF according to an embodiment of the disclosure. The method includes at least a part of the following.

In S310, a first request is sent. The first request is used by a first AIoT device to determine a reporting device ID.

In S320, a first response is received. The first response carries a protected ID of the first AIoT device. The first response is used to determine to trigger an AIoT authentication function to perform authentication with the first AIoT device.

FIG. 4 is a schematic flow chart of a communication method performed by an AIoT authentication function according to an embodiment of the disclosure. The method includes at least a part of the following.

In S410, an authentication request is received from an AIoT NF. The authentication request is used to trigger authentication between the AIoT authentication function and a first AIoT device.

The AIoT NF may be alternatively referred to as an AIoT function (AIoTF), or an AIoT management function (MF).

The AIoT NF may be disposed in a first core network device. The first core network device may be an existing core network element, added with the AIoTF, in a fifth-generation core network (5GC). For example, the first core network device may be a control plane network element provided with the AIoT NF. Alternatively, the first core network device may be a network element, dedicated to an AIoT (or dedicated to an AIoT service), newly added in the core network.

The AIoT authentication function may be alternatively referred to as an AIoT authentication and authorization function.

Optionally, the AIoT authentication function may be disposed in the first core network device. That is, both the AIoT authentication function and the AIoT NF are disposed in the first core network device.

Optionally, the AIoT authentication function may be disposed in a second core network device, where the second core network device is different from the first core network device. That is, the AIoT authentication function and the AIoT NF are respectively disposed in two different core network devices. The second core network device may be an existing core network element, added with the AIoT authentication function (or the AIoT authentication and authorization function), in the 5GC. Alternatively, the second core network device may be a network element, dedicated to AIoT authentication, newly added in the core network.

For a better understanding of subsequent procedures, various types of IDs of the first AIoT device that may be involved in the disclosure are described first.

A permanent ID of the first AIoT device may be referred to as a real ID of the first AIoT device, or may be referred to as a long-term ID of the first AIoT device.

Optionally, the permanent ID of the first AIoT device may be pre-saved in the first AIoT device and on a network side (which at least includes the AIoT NF or the AIoT authentication function).

Optionally, the permanent ID of the first AIoT device may be pre-saved in the first AIoT and on an application function (AF) side. In this case, the AF may also provide the permanent ID of the first AIoT device to the network side (which at least includes the AIoT NF or the AIoT authentication function).

The permanent ID of the first AIoT device may be composed of at least one of the following five IDs: a home network identifier, a network routing identifier, an ID used to identify a third party (3rd party), an ID used to identify a specific first AIoT device, or an identifier of the first AIoT device defined by a 3rd party.

The home network identifier is used to identify a network to which the first AIoT device belongs. The home network identifier may also be referred to as an operator ID, an operator identifier, or a home network ID. The home network identifier may be represented as home network identifier (HN ID).

The network routing identifier is used by the network to route a related request of the first AIoT device to a corresponding network. The network routing identifier may be used in a case where the AIoT device does not have a concept of a home network. For example, if the permanent ID of the first AIoT device includes the home network identifier, the permanent ID of the first AIoT device may not include the network routing identifier; for another example, if the permanent ID of the first AIoT device includes the network routing identifier, the permanent ID of the first AIoT device may not include the home network identifier.

The ID used to identify a 3rd party may also be alternatively referred to as a 3rd party ID, and may be represented as an owner identifier. The ID used to identify a 3rd party may be an AF ID or at least a part of the content included in the AF ID. The 3rd party may be a producer of the AIoT device, a server of the 3rd party, or an AF of the 3rd party. The functions of the AF may include sending a service request message to the 5GC (specifically, the AIoT NF) to trigger the AIoT service.

The ID used to identify a specific first AIoT device may be alternatively referred to as a specific ID of the first AIoT device, or a specific ID of the first AIoT device in a 5G network. The ID used to identify a specific first AIoT device may be represented as an instance identifier. The ID used to identify a specific first AIoT device may be allocated for the AIoT device by the 5GC.

The identifier of the first AIoT device defined by a 3rd party may be represented as a 3rd party-defined identifier. The identifier of the first AIoT device defined by a 3rd party may also be alternatively referred to as a 3rd party ID of the first AIoT device, or a 3rd party-defined identifier of the first AIoT device, etc. The identifier of the first AIoT device defined by a 3rd party may be allocated for the first AIoT device by the AF.

Whether the permanent ID of the first AIoT device specifically includes some or all of the above five IDs may be determined according to actual situations. For example, the content included in the permanent ID of the first AIoT device may be related to a mode of allocating the permanent ID of the first AIoT device. There are two possible modes of allocating the permanent ID of the first AIoT device.

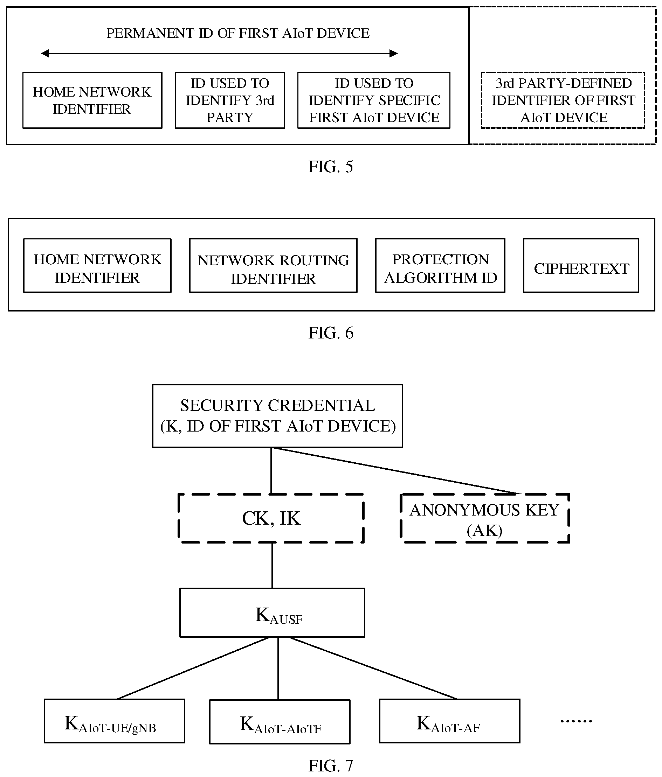

Mode 1: A device ID is defined by a third generation partnership project (3GPP). The AF of the 3rd party relies on a device ID (i.e., an ID used to identify a specific first AIoT device) allocated by an operator to perform the AIoT service. The network (e.g., a 3GPP network) may uniquely identify the specific AIoT device. In this mode, the permanent ID of the first AIoT device does not include the 3rd party-defined ID. The permanent ID of the first AIoT device may include the home network identifier and the ID used to identify a specific first AIoT device. Alternatively, the permanent ID of the first AIoT device may include, as illustrated by solid-line boxes in FIG. 5, a home network identifier, an ID used to identify a 3rd party, and an ID used to identify a specific first AIoT device.

Mode 2: A device ID is defined by a 3GPP and a 3rd party. In this mode, the network (e.g., a 3GPP network) relies on the 3rd party to allocate and manage the ID of the first AIoT device. That is, the 3rd party pre-allocates and writes a 3rd party-defined identifier of the first AIoT device to the first AIoT device. The network (the 3GPP network) relies on an identifier allocated for the first AIoT device by the 3rd party. The network side needs to interact with the first AIoT device in advance to obtain the 3rd party-defined identifier of the first AIoT device, and finally obtain a permanent ID the same as the permanent ID of the first AIoT device. For example, the network may broadcast a partial ID of the first AIoT device (for example, only broadcasting a home network identifier (abbreviated as HN ID) and an owner identifier). When the first AIoT device that receives the broadcast confirms that its own HN ID and owner identifier match the broadcasted HN ID and owner identifier, the first AIoT device may respond to the broadcast and return a specific device ID (for example, at least including the 3rd party-defined identifier of the first AIoT device) in the response. The network can generate the permanent ID of the first AIoT device based on the specific device ID in the response returned by the first AIoT device, the HN ID, and the owner ID. In this mode, the permanent ID of the first AIoT device may include, as illustrated in FIG. 5, a home network identifier, an ID used to identify a 3rd party, and a 3rd party-defined identifier of the first AIoT device.

Optionally, the permanent ID of the first AIoT device may further include a device type. The device type may be a type ID corresponding to an AIoT device type.

It may also be noted that, only after an establishment of a security channel is completed, the first AIoT device may send a protected permanent ID to the network through the security channel. The establishment of the security channel may refer to completion of key generation and activation of security protection.

The above is merely for exemplary illustration of the composition of the permanent ID taking the first AIoT device as an example. The permanent ID of each of one or more AIoT devices may be involved below. The composition of the permanent ID of each AIoT device may be the same as the composition of the permanent ID of the first AIoT device, which will not be enumerated herein.

An external ID of the first AIoT device is used by the AF to uniquely identify the first AIoT device. For example, when the AF needs to send a service request message carrying DL data corresponding to the first AIoT device, the external ID of the first AIoT device may be carried in the service request message to uniquely represent the specific first AIoT device.

The external ID of the first AIoT device may be generated by and saved in the AF. The composition of the external ID of the first AIoT device is not limited in this embodiment. In some possible examples, the external ID of the first AIoT device may be the 3rd party ID of the first AIoT device.

Optionally, the external ID of the first AIoT device may be saved in or configured to the first AIoT device, for example, may be pre-configured to the first AIoT device by the AF, or may be pre-configured to the first AIoT device by the AIoT NF. A configuration mode is not limited or enumerated in this embodiment. A message sent to the first AIoT device from the network side, for example, the AIoT NF may also include the external ID of the first AIoT device.

Optionally, the external ID of the first AIoT device may also be saved in the AIoT NF.

The composition of a temporary ID of the first AIoT device is not limited in this embodiment.

Optionally, the temporary ID of the first AIoT device may be saved in the first AIoT device and the AF. In this case, the temporary ID of the first AIoT device may be generated by the AF, and may be pre-configured to the first AIoT device by the AF. The AF may also send the temporary ID of the first AIoT device to the network side (which at least includes the AIoT NF), so that the first AIoT device, the AIoT NF, and the AF can all obtain the temporary ID of the first AIoT device in advance.

Optionally, the temporary ID of the first AIoT device may be saved in the first AIoT device and the network side (which at least includes the AIoT NF). In this case, the temporary ID of the first AIoT device may be allocated or generated by the AIoT NF.

The temporary ID of the first AIoT device may also be classified into two types: an initial temporary ID of the first AIoT device and an updated temporary ID of the first AIoT device.

In one example, the initial temporary ID of the first AIoT device may be allocated by the AF. Specifically, the initial temporary ID of the first AIoT device may be generated by the AF and pre-configured to the first AIoT device. Furthermore, the AF may also send the initial temporary ID of the first AIoT device to the AIoT NF. The composition of the initial temporary ID of the first AIoT device is not limited in this embodiment, and shall fall within the protection scope of this embodiment provided that the initial temporary ID of the first AIoT device is different from other types of IDs of the first AIoT device.

In one example, the updated temporary ID of the first AIoT device may be allocated by the network side (such as the AIoT NF). Specifically, the updated temporary ID of the first AIoT device may be generated by the AIoT NF and allocated to the first AIoT device through a message transmitted between the AIoT NF and the first AIoT device. The composition of the updated temporary ID of the first AIoT device is not limited in this embodiment, and shall fall within the protection scope of this embodiment provided that the updated temporary ID of the first AIoT device is different from other types of IDs of the first AIoT device.

The updated temporary ID of the first AIoT device may be an updated temporary ID relative to a previous temporary ID of the first AIoT device. For example, the updated temporary ID of the first AIoT device is a first-updated temporary ID relative to the initial temporary ID of the first AIoT device. For example, the updated temporary ID of the first AIoT device is a further updated temporary ID after a previous-updated temporary ID of the first AIoT device.

The illustration of the temporary ID currently used or saved by the first AIoT device may be provided below. For example, when the first AIoT device does not complete registration, a temporary ID currently used or saved by the first AIoT device may be the initial temporary ID of the first AIoT device. For example, when the first AIoT device completes registration or updates the temporary ID for one or more times, the temporary ID currently used or saved by the first AIoT device may refer to a previous-updated (or a latest-updated) temporary ID of the first AIoT device.

The use of the temporary ID of the first AIoT device is exemplarily illustrated. When the network side (such as the AIoT NF) needs to perform paging or discovery processing on the first AIoT device, the temporary ID of the first AIoT device (which may be the initial temporary ID of the first AIoT device, or the previous-updated (or the latest-updated) temporary ID of the first AIoT device) may be carried in a corresponding message. After the network side (such as the AIoT NF) establishes a security connection with the first AIoT device, an updated temporary ID may be allocated to the first AIoT device to prevent the AIoT device from being subjected to linkability attacks and traceability attacks. An update frequency of the temporary ID may be determined by the network side (such as the AIoT NF). For example, the network side may determine whether to allocate the updated temporary ID of the first AIoT device based on a pre-configured temporary ID update period. Correspondingly, a message sent by the first AIoT device may carry a temporary ID of the first AIoT device to avoid permanent ID transmission.

An internal ID of the first AIoT device may be used by the network side (such as the AIoT NF) to identify the first AIoT device.

The AIoT NF may maintain a mapping relationship or correspondence relationship between the external ID of the first AIoT device and the internal ID of the first AIoT device. Maintaining, by the AIoT NF, a mapping relationship between the external ID of the first AIoT device and the internal ID of the first AIoT device may function as follows. When receiving a service request message (such as a first service request message) carrying the external ID of the first AIoT device, the AIoT NF converts the external ID of the first AIoT device into the internal ID of the first AIoT device, based on the mapping relationship between the external ID of the first AIoT device and the internal ID of the first AIoT device, to identify a specific AIoT device in the service request message (such as the first service request message).

The internal ID of the first AIoT device may include at least one of: the permanent ID of the first AIoT device or the temporary ID of the first AIoT device.

Optionally, the internal ID of the first AIoT device may further include at least one of: information related to a group in which the first AIoT device is located or information related to an area in which the first AIoT device is located, etc.

The information related to a group in which the first AIoT device is located may include at least one of: a group ID (for example, represented as GID) of the group in which the first AIoT device is located, or a partial permanent ID of the first AIoT device. The partial permanent ID of the first AIoT device may refer to an identical part between the ID of the first AIoT device and IDs of one or more other AIoT devices. For example, the partial permanent ID of the first AIoT may include a home network ID and an ID used to identify a 3rd party. Since there may be multiple AIoT devices having identical home network IDs and IDs used to identify a 3rd party, the partial permanent ID of the first AIoT may serve as one type of information related to a group in which the first AIoT device is located.

The information related to an area in which the first AIoT device is located may be alternatively referred to as a default ID associated with specific location information. The information related to an area in which the first AIoT device is located may be represented by an area-related number or an area-related index number, or may be represented by a geographic location, which is not limited or enumerated in this embodiment.

In some possible implementations, the processing performed by the AIoT NF may include the following. The AIoT NF receives a first service request message. The first service request message carries DL data corresponding to one or more AIoT devices. The one or more AIoT devices include the first AIoT device.

Taking the first AIoT device as an example, processing performed by the AIoT NF after receiving the first service request message may include the following. In a case where an available security context of the first AIoT device is not found, a first request is sent. Herein, the fact that the available security context of the first AIoT device is not found means that the AIoT NF may determine that authentication needs to be performed on the first AIoT device, and then the AIoT NF sends the first request.

The first service request message may also be referred to as a first AIoT service request (message).

The DL data corresponding to one or more AIoT devices is DL data corresponding to each AIoT device in the one or more AIoT devices. DL data corresponding to different AIoT devices may be the same or different, which is not limited in this embodiment.

Taking the first AIoT device as an example, the DL data corresponding to the first AIoT device may include at least one of the following corresponding to the first AIoT device: an inventory message, a read command, a write command, specific data to be written into a memory, etc. For example, the DL data corresponding to the first AIoT device may only include an inventory message corresponding to the first AIoT device or a read command corresponding to the first AIoT device. For example, the DL data corresponding to the first AIoT device may include: a write command corresponding to the first AIoT device, and specific data to be written into the memory corresponding to the first AIoT device.

In one embodiment, the first service request message may further carry one of: the external ID of each AIoT device in the one or more AIoT devices, or the permanent ID of each

AIoT device in the one or more AIoT devices.

In one example, the first service request message may carry DL data corresponding to each AIoT device and an external ID of each AIoT device.

Taking the first AIoT device as an example, processing performed by the AIoT NF after receiving the first service request message may include the following. In a case where the first service request message carries the external ID of the first AIoT device, the external ID of the first AIoT device is converted into the internal ID of the first AIoT device based on the correspondence relationship or mapping relationship between the external ID of the first AIoT device and the internal ID of the first AIoT device. In a case where it is determined that the available security context of the first AIoT device is not found based on the internal ID of the first AIoT device, the first request is sent.

Optionally, a mode of determining whether the available security context of the first AIoT device is found based on the internal ID of the first AIoT device may include the following. In a case where a security context ID of the first AIoT device associated with the internal ID of the first AIoT device is not found, it is determined that the available security context of the first AIoT device is not found.

The correspondence relationship or mapping relationship between the external ID of the first AIoT device and the internal ID of the first AIoT device may be saved in the AIoT NF, that is, the AIoT NF can locally perform the above determination.

Alternatively, the correspondence relationship or mapping relationship between the external ID of the first AIoT device and the internal ID of the first AIoT device may be saved in the AIoT authentication function. The AIoT NF may send the internal ID of the first AIoT device to the AIoT authentication function, and receive a result, sent by the AIoT authentication function, of whether a security context ID corresponding to or associated with the internal ID of the first AIoT device is saved. Correspondingly, based on the internal ID of the first AIoT device sent by the AIoT NF, the AIoT authentication function locally searches for whether a security context ID corresponding to or associated with the internal ID of the first AIoT device is saved, and feeds back the result to the AIoT NF.

In this example, the first AIoT device may not have undergone an authentication procedure, therefore the AIoT NF and/or the AIoT authentication function is unable to find the security context of the first AIoT device, thereby determining to perform authentication on the first AIoT device and sending the first request.

Optionally, a mode of determining whether the available security context of the first AIoT device is found based on the internal ID of the first AIoT device may include the following. In a case where a security context ID of the first AIoT device associated with the internal ID of the first AIoT device is found, and the security context of the first AIoT device, associated with the security context ID of the first AIoT device, is expired, it is determined that the available security context of the first AIoT device is not found.

A mode for the AIoT NF to determine whether the security context ID of the first AIoT device associated with the internal ID of the first AIoT device is found is the same as that in the above examples, which will not be repeated herein.

If the security context of the first AIoT device is saved in the AIoT NF, the AIoT NF determining whether the security context of the first AIoT device is expired may refer to determining whether an authentication result in a locally-saved security context of the first AIoT device is valid or expired. A mode of determining or configuring a relevant duration for validity or expiration of the authentication result is not limited in this embodiment.

If the security context of the first AIoT device is saved in the AIoT authentication function, the AIoT NF may determine whether the security context of the first AIoT device associated with the security context ID of the first AIoT device is expired as follows. The AIoT NF may send the security context ID of the first AIoT device to the AIoT authentication function. The AIoT authentication function locally finds the security context of the first AIoT device. The AIoT NF receives the security context of the first AIoT device sent by the AIoT authentication function and determines whether the security context of the first AIoT device is expired. Alternatively, the AIoT NF may send the security context ID of the first AIoT device to the AIoT authentication function. The AIoT authentication function locally finds the security context of the first AIoT device. The AIoT NF receives a result of whether the security context of the first AIoT device is expired sent by the AIoT authentication function.

In this example, the first AIoT device may complete the authentication procedure. However, the security context of the first AIoT device is expired, which means that before a new security channel is established, transmitted messages cannot be protected by a current security context. Therefore, the security context of the first AIoT device needs to be updated, authentication update or re-authentication needs to be performed on the first AIoT device, and the first request needs to be sent to the first AIoT device.

In one example, the first service request message may carry the DL data corresponding to each AIoT device and the permanent ID of each AIoT device.

Taking the first AIoT device as an example, processing performed by the AIoT NF after receiving the first service request message may specifically include the following. In a case where it is determined that the available security context of the first AIoT device is not found based on the permanent ID of the first AIoT device, the AIoT NF sends the first request. In this example, a specific processing mode of determining whether the available security context of the first AIoT device is found based on the permanent ID of the first AIoT device is the same as the specific processing mode of determining whether the available security context of the first AIoT device is found based on the internal ID of the first AIoT device in the above example, which will not be repeated herein.

In one embodiment, the first service request message may further carry at least one of: a reader ID or area information.

The reader may be one of: an access network device or a terminal. The access network device may refer to an access network device serving or managing one or more AIoT devices. The terminal may be an intermediate device or a proxy device or a relay device for one or more AIoT devices, that is, the one or more AIoT devices can interact with devices on the network side through a terminal. In some possible examples, the terminal may also be referred to as any one of an intermediate node, a proxy UE, an intermediate UE, a relay device, an intermediate device, a proxy device, etc.

The reader ID may include at least one of: a permanent reader ID, a temporary reader ID, or an external reader ID.

The external reader ID may include a 3rd party reader ID. A mapping relationship or correspondence relationship between the external reader ID and an internal reader ID may be saved in the AIoT NF. In this case, the internal reader ID may include at least one of: a temporary reader ID, a permanent reader ID, etc. Processing performed by the AIoT NF after receiving the first service request message may include the following. In a case where the first service request message carries the external reader ID, the external reader ID is converted into the internal reader ID.

The area information may include one or more tracking areas (TAs). Any TA may be represented by at least one of: a tracking area code (TAC) corresponding to the TA or a tracking area identity (TAI) corresponding to the TA.

In one example, the AIoT NF may receive the first service request message as follows. The AIoT NF receives the first service request message from the AF.

In one example, the AIoT NF may receive the first service request message as follows. The AIoT NF receives the first service request message from a network exposure function (NEF). The processing performed by the NEF may include the following. The NEF receives a second service request message from the AF, and sends the first service request message to the AIoT NF. The processing performed by the AF may include the following. The AF sends the second service request message to the NEF.

In one case, content carried by the second service request message is the same as the content carried by the first service request message.

In another case, the second service request message is at least partially different from the first service request message.

Both the second service request message and the first service request message carry the DL data corresponding to the one or more AIoT devices.

In addition to carrying the DL data corresponding to the one or more AIoT devices, the second service request message may further carry at least one of: external IDs of one or more AIoT devices, the external reader ID, or the area information. In this case, the NEF may perform ID conversion, so that the first service request message sent by the NEF, in addition to carrying the DL data corresponding to the one or more AIoT devices, may further carry at least one of: internal IDs of one or more AIoT devices, the internal reader ID, or the area information. ID conversion performed by the NEF is similar to ID conversion performed by the AIoT NF in the above embodiments, which will not be repeated herein.

In some possible implementations, the first request is actively triggered by the AIoT NF. The method performed by the AIoT NF further includes the following. In a case where the security context of the first AIoT device needs to be updated, the AIoT NF sends the first request.

Optionally, the security context of the first AIoT device may include a security parameter corresponding to the first AIoT device. The security parameter corresponding to the first AIoT device (specifically may include one or more keys) may have a corresponding update period. Optionally, the security context of the first AIoT device may correspond to or be associated with an authentication validity period (or a validity period of an authentication result).

If the security context of the first AIoT device is saved in the AIoT NF, the AIoT NF determines whether the security parameter corresponding to the first AIoT device reaches the update period and/or determines whether authentication for the security context of the first AIoT device is expired. In a case where the security parameter corresponding to the first AIoT device reaches the update period, and/or authentication for the security context of the first AIoT device is expired, it is determined that a security parameter in the security context of the first AIoT device needs to be updated.

If the security context of the first AIoT device is saved in the AIoT authentication function, the AIoT NF determines that the security parameter in the security context of the first AIoT device needs to be updated in a case of receiving, from the AIoT authentication function, a notification that the security parameter corresponding to the first AIoT device reaches the update period, and/or a notification that authentication for the security context of the first AIoT device is expired. The processing performed by the AIoT authentication function may include the following. In a case where the security parameter corresponding to the first AIoT device reaches the update period, the AIoT authentication function sends, to the AIoT NF, the notification that the security parameter corresponding to the first AIoT device reaches the update period; and/or, in a case where the authentication validity period of the security context of the first AIoT device is expired or being not within the authentication validity period, the AIoT authentication function sends, to the AIoT NF, the notification that authentication for the security context of the first AIoT device is expired.

In this embodiment, determining whether authentication for the security context of the first AIoT device is expired may also be replaced by determining whether authentication for the security context of the first AIoT device is about to expire. A mode of determining that the security context of the first AIoT device is about to expire may be as follows. A moment obtained by subtracting a specified duration from a moment when authentication for the security context of the first AIoT device is expired, is taken as a moment when the security context of the first AIoT device is about to expire. In a case where a current moment reaches the moment when the security context of the first AIoT device is about to expire, it is determined that the security context of the first AIoT device is about to expire. The specified duration may be configured according to actual situations, for example, may be 1 hour, or may be 10 minutes, or may be longer or shorter, which is not limited or enumerated herein.

In this implementation, the first AIoT device may complete the authentication procedure. However, the security context of the first AIoT device is expired (or is about to expire), or the security parameter (i.e., a key) needs to be updated, which means that there may be a risk that the transmitted messages cannot be protected by the current security context. Therefore, authentication update (or re-authentication) needs to be performed on the first AIoT device to update the security context of the first AIoT device.

Optionally, the AIoT NF may send the first request as follows. The AIoT NF sends the first request to the reader. The first AIoT device may receive the first request as follows. The first AIoT device receives the first request from the reader. In this case, the above first service request message may carry the reader ID, so that the AIoT NF can determine the reader. The first request may be sent by the AIoT NF to the first AIoT device through the reader.

Optionally, the AIoT NF may send the first request as follows. The AIoT NF sends a DL non-access stratum (NAS) message carrying the first request to the first AIoT device. The first AIoT device may receive the first request as follows. The first AIoT device receives the DL NAS message carrying the first request from the AIoT NF.

The first request may carry at least one of: the temporary ID of the first AIoT device, the information related to a group in which the first AIoT device is located, or the information related to an area in which the first AIoT device is located.

Optionally, the first request may carry the temporary ID of the first AIoT device.

A reason why the AIoT NF sends the first request may be that, the first AIoT device does not complete the authentication procedure and therefore authentication needs to be performed on the first AIoT device. The first request may be used for initial paging or initial discovery of the first AIoT device. The first request is referred to as an initial paging message (for example, the reader is an access network device) or an initial discovery message (for example, the reader is a terminal). The first request carries the initial temporary ID of the first AIoT device.

Alternatively, a reason why the AIoT NF determines that authentication update (or re-authentication) needs to be performed on the first AIoT device and sends the first request may be that, the security context of the first AIoT device is expired (or is about to expire) or the security parameter (i.e., the key) needs to be updated. The first request may be used for registration update of the first AIoT device, or may be used for security parameter update of the first AIoT device, or may be used for key update of the first AIoT device, or may be used for re-authentication with the first AIoT device. In this case, the first request may carry the temporary ID currently used or saved by the first AIoT device.

It may be understood that, if the AIoT NF receives the first service request message before sending the first request, the AIoT NF may first save the DL data corresponding to the first AIoT device, that is, the first request does not carry the DL data of the first AIoT device.

Optionally, the first AIoT device may send the first response as follows. In a case where the first request carries the temporary ID of the first AIoT device, the first AIoT device sends the first response. Since the first request carries the temporary ID of the first AIoT device, only the first AIoT device shall send the first response.

It may be noted that, if the AIoT NF side also determines that authentication or authentication update needs to be performed on another certain AIoT device, the first request may also be sent to the said another AIoT device. The relevant processing performed by said another AIoT device is the same as the processing performed by the first AIoT device, which will not be enumerated herein.

Optionally, the first request may carry the information related to a group in which the first AIoT device is located, or the information related to an area in which the first AIoT device is located. The first AIoT device may send the first response as follows. In a case where the first request carries the information related to a group in which the first AIoT device is located or the information related to an area in which the first AIoT device is located, the first AIoT device sends the first response. The first request may be a broadcast message. In addition to the first AIoT device, one or more other AIoT devices may also send responses.

For example, if the AIoT NF determines that multiple AIoT devices, including the first AIoT device, all require authentication (or re-authentication), the AIoT NF may carry, in the first request, the information related to a group in which the first AIoT device is located or the information related to an area in which the first AIoT device is located, so as to discover or page multiple AIoT devices at once.

For example, if the AIoT NF determines that only the first AIoT device requires authentication (or re-authentication), since there is no available security context of the first AIoT device in this case, the information related to a group in which the first AIoT device is located or the information related to an area in which the first AIoT device is located may be carried in the first request to avoid direct sending of the permanent ID of the first AIoT device.

For example, the first request may specifically be an initial DL paging message or an initial discovery message. By sending the information related to a group in which the first AIoT device is located or the information related to an area in which the first AIoT device is located (specifically may include at least one of a GID, a service ID, a location-related ID, etc.), an ID of a specific AIoT device is prevented from being sent without security channel establishment, and this is applicable to a scenario where multiple AIoT devices are triggered in a group service.

In some embodiments, the protected ID of the first AIoT device includes the temporary ID of the first AIoT device or an encrypted permanent ID of the first AIoT device.

Herein, the protected ID of the first AIoT device may also be simply alternatively referred to as the ID of the first AIoT device, or may be alternatively referred to as an ID reported by the AIoT device. All possible alternative names of the protected ID of the first AIoT device are not limited or enumerated herein.

The temporary ID of the first AIoT device may be the initial temporary ID of the first AIoT device, or the previous-updated or latest-updated temporary ID of the first AIoT device.

The encrypted permanent ID of the first AIoT device is obtained by performing computation based on an anonymous key (AK) and the permanent ID of the first AIoT device. The AK is obtained by performing computation based on a root key corresponding to the first AIoT device.

The root key corresponding to the first AIoT device may be included in a security credential of the first AIoT device.

The security credential of the first AIoT device may be pre-saved in the first AIoT device. The security credential of the first AIoT device may be provided to the first AIoT device by a 3rd party (such as the AF). The security credential of the first AIoT device may also be pre-provided by a 3rd party (such as the AF) to the AIoT authentication function on the network side and/or an AIoT key management function (AIoT KMF) on the network side.

In addition to the root key (represented as K), the security credential of the first AIoT device may further include the permanent ID of the first AIoT device or a first part of content of the permanent ID of the first AIoT device. Exemplarily, the first part of the content may be the 3rd party-defined identifier of the first AIoT device, or the 3rd party-defined identifier of the first AIoT device and the 3rd party ID, etc. The content or type of the ID of the first AIoT device that may be included in the security credential of the first AIoT device is not enumerated or limited herein.

Optionally, a computation mode for obtaining the AK may include the following. A freshness value is taken as an input parameter. The root key K is taken as an input key. Computation is performed on the input parameter and the input key, using a first preset algorithm, to obtain the AK. The first preset algorithm may be configured according to actual situations, for example, may be f5 function (an AK derivation function), etc., which is not limited or enumerated herein.

The freshness value may be transmitted to the network side by the AIoT device, or may be generated by the first AIoT device and the network side in the same manner. By including the freshness value in AK generation, being tracked due to long-term use of the same encrypted ID can be avoided. Exemplarily, the freshness value may be determined based on a counter or a timer. For example, when synchronized timers are simultaneously maintained at the AIoT authentication function and/or the AIoT KMF on the network side and the first AIoT device, a value of the timers at a time of AK calculation is taken as the freshness values. For example, when counters with identical initial values are simultaneously maintained at the AIoT authentication function and/or the AIoT KMF on the network side and the first AIoT device, a value of the counters at a time of AK calculation is taken, by the first AIoT device, as the freshness value, and the counters may be incremented by one every time an encryption or decryption computation related to the first AIoT device is performed, or may be incremented by one every time an AK computation related to the first AIoT device is performed.

Optionally, the computation mode for obtaining the AK may be deriving a subordinate key based on the K. A computation mode for such derivation is not limited in this embodiment.

Exemplarily, the encrypted permanent ID of the first AIoT device may be obtained by performing computation based on the AK and at least a part of the content of the permanent ID of the first AIoT device.

In one case, the encrypted permanent ID of the first AIoT device is a fully encrypted ID, and the encrypted permanent ID of the first AIoT device may be obtained by performing computation based on the AK and full content of the permanent ID of the first AIoT device. An encryption algorithm for the encrypted permanent ID of the first AIoT device may be configured according to actual situations.

For example, the first AIoT device may obtain a first confidentiality key stream by performing computation based on the AK and a first encryption parameter, and may obtain the encrypted permanent ID of the first AIoT device by performing exclusive or (XOR) computation based on the first confidentiality key stream and the full content of the permanent ID of the first AIoT device. The first encryption parameter may be configured according to actual situations, for example, the first encryption parameter may include a length of the permanent ID of the first AIoT device, the freshness value, etc. Content that may be included in the first encryption parameter is not limited or enumerated herein. A freshness value may also be included in an ID encryption procedure to avoid being tracked due to long-term use of the same encrypted ID.

In another case, the encrypted permanent ID of the first AIoT device is a partially encrypted ID. The encrypted permanent ID of the first AIoT device may be obtained by performing computation based on the AK and a part of the content of the permanent ID of the first AIoT device. Specifically, the encrypted permanent ID of the first AIoT device may include: a plaintext of the ID of the first AIoT device and a ciphertext of the ID of the first AIoT device. The ciphertext of the ID of the first AIoT device may be obtained by performing encryption on a second part of the content of the permanent ID of the first AIoT device based on the AK.

A computation mode for obtaining the ciphertext of the ID of the first AIoT device may be as follows. A second confidentiality key stream is obtained by performing computation based on the AK and a second encryption parameter. The ciphertext of the ID of the first AIoT device is obtained by performing XOR computation based on the second confidentiality key stream and the second part of the content of the permanent ID of the first AIoT device. The second encryption parameter may be configured according to actual situations, for example, the second encryption parameter may include a length of the second part of the content of the permanent ID of the first AIoT device, the freshness value, etc. Content that may be included in the second encryption parameter is not limited or enumerated herein.

In this case, the ciphertext of the ID of the first AIoT device is mainly used to keep a unique ID of the first AIoT device confidential. The functions of the plaintext of the ID of the first AIoT device may include routing a received message (or content in the message) to a corresponding AIoT authentication function (or a network element provided with the AIoT authentication function), and/or identifying network information of the first AIoT device.

The second part of the content of the permanent ID of the first AIoT device may include at least one of: the ID used to identify a 3rd party, the ID used to identify a specific first AIoT device, or the 3rd party-defined identifier of the first AIoT device. Preferably, the second part of the content at least includes the ID used to identify a specific first AIoT device. Optionally, the second part of the content may include the ID used to identify a specific first AIoT device and the 3rd party-defined identifier of the first AIoT device; or may include the ID used to identify a third party, the ID used to identify a specific first AIoT device, and the 3rd party-defined identifier of the first AIoT device.

The plaintext of the ID of the first AIoT device may include a remaining part of the content of the permanent ID of the first AIoT device, except for the second part of the content. For example, if the second part of the content includes the ID used to identify a specific first AIoT device and the 3rd party-defined identifier of the first AIoT device, the plaintext of the ID of the first AIoT device may include at least one of: the home network identifier, the network routing identifier, or the ID used to identify a 3rd party.

Optionally, the plaintext of the ID of the first AIoT device may further include a device type.

Optionally, the plaintext of the ID of the first AIoT device may further include a protection algorithm ID. The protection algorithm ID enables the AIoT NF to determine an encryption algorithm for the ciphertext of the ID of the first AIoT device. Since a symmetric encryption mode is used in embodiments of the disclosure, the AIoT NF can determine a corresponding decryption algorithm after determining the encryption algorithm.

With reference to FIG. 6, an exemplary illustration of an encrypted permanent ID of the first AIoT device is provided. The encrypted permanent ID of the first AIoT device includes the plaintext of the ID of the first AIoT device and the ciphertext of the ID of the first AIoT device (simply represented as ciphertext in FIG. 6). The plaintext of the ID of the first AIoT device includes the home network identifier, the network routing identifier, and the protection algorithm ID.

In addition, the encrypted permanent ID of the first AIoT device may be used in but not limited to the above possible procedures. For example, in a case where the first AIoT device receives an identity request (ID request) to determine that a device ID needs to be reported, so as to facilitate synchronization on the network side, the above processing mode may also be adopted to report the encrypted permanent ID of the first AIoT device.

Optionally, the first AIoT device may send the first response as follows. The first AIoT device sends the first response to the reader. The AIoT NF may receive the first response as follows. The AIoT NF receives the first response from the reader.

Optionally, the first AIoT device may send the first response as follows. The first AIoT device sends an UL NAS message carrying the first response to the AIoT NF. The AIoT NF may receive the first response as follows. The AIoT NF receives the UL NAS message carrying the first response from the first AIoT device.

In some possible implementations, after the AIoT NF receives the first response, the method further includes the following. The permanent ID of the first AIoT device The AIoT is obtained by performing computation based on the AK and the encrypted permanent ID of the first AIoT device. The AK is obtained by performing computation based on the root key corresponding to the first AIoT device.

Optionally, the AK may be obtained by performing computation by the AIoT NF, and the computation mode is the same as the computation mode performed by the first AIoT device, which will not be repeated herein. The root key K of the first AIoT device may be obtained by the AIoT NF from a function (such as the AIoT authentication function or the AIoT KMF) that saves the security credential of the first AIoT device.

Optionally, the AK may be obtained by the AIoT NF from a function (such as the AIoT authentication function or the AIoT KMF) that saves the security credential of the first AIoT device. For example, the AIoT NF may send a request for obtaining the AK to the AIoT authentication function or the AIoT KMF, and receive the AK from the AIoT authentication function or the AIoT KMF.

The decryption algorithm for the encrypted permanent ID of the first AIoT device shall correspond to the encryption algorithm of the encrypted permanent ID of the first AIoT device.

In one example, the encrypted permanent ID of the first AIoT device is obtained by performing encryption on the full content of the permanent ID or full content of the temporary ID. The AIoT NF may obtain a first decryption key stream by performing computation based on the AK and a first decryption parameter, and may obtain the permanent ID of the first AIoT device by performing XOR computation based on the first decryption key stream and the encrypted permanent ID of the first AIoT device. The first decryption parameter shall correspond to the first encryption parameter, for example, the first decryption parameter may include a length of the encrypted permanent ID of the first AIoT device, the freshness value, etc. Content that may be included in the first decryption parameter is not limited or enumerated herein.

In one example, the encrypted permanent ID of the first AIoT device includes the plaintext of the ID of the first AIoT device and the ciphertext of the ID of the first AIoT device. The AIoT NF may obtain a second decryption key stream by performing computation based on the AK and a second decryption parameter, and may obtain the second part of the content of the permanent ID of the first AIoT device by performing XOR computation based on the second decryption key stream and the ciphertext of the ID of the first AIoT device; and may obtain the permanent ID of the first AIoT device based on the second part of the content of the permanent ID of the first AIoT device and the plaintext of the ID of the first AIoT device. The second decryption parameter shall correspond to the second encryption parameter, for example, the second decryption parameter may include a length of the ciphertext of the ID of the first AIoT device, the freshness value, etc. Content that may be included in the second decryption parameter is not limited or enumerated herein.

In some possible implementations, after the AIoT NF receives the first response, the method further includes the following. The encrypted permanent ID of the first AIoT device is sent. The permanent ID of the first AIoT device is received.

The encrypted permanent ID of the first AIoT device is sent as follows. The encrypted permanent ID of the first AIoT device is sent to a decryption function. The permanent ID of the first AIoT device is received as follows. The permanent ID of the first AIoT device sent by the decryption function is received.

The decryption function may obtain the AK through computation and decrypt the encrypted permanent ID of the first AIoT device. The computation mode for obtaining the AK is the same as that in the above embodiments, and the decryption algorithm for the encrypted permanent ID of the first AIoT device is the same as that in the above embodiments, which will not be repeated herein.

The decryption function may be disposed in a network element newly added in the core network, and the network element is dedicated to performing decryption on an AIoT device ID. Alternatively, the decryption function may be disposed in an existing network element in the core network, that is, a network element dedicated to performing decryption on an encrypted permanent AIoT device ID is added in the existing network element of the core network. Optionally, the decryption function may also be replaced by an AIoT KMF, or other possible functions, which is not limited or enumerated herein.

In some possible implementations, after the AIoT NF receives the first response, the method further includes the following. An authentication request is sent to the AIoT authentication function. The authentication request is used to trigger authentication between the AIoT authentication function and the first AIoT device. The authentication request carries one of: the permanent ID of the first AIoT device, the temporary ID of the first AIoT device, or the encrypted permanent ID of the first AIoT device.

In one embodiment, after receiving the first response and obtaining the decrypted permanent ID of the first AIoT device or the temporary ID of the first AIoT device, the AIoT NF sends the authentication request to the AIoT authentication function. The authentication request carries one of: the permanent ID of the first AIoT device or the temporary ID of the first AIoT device.

Optionally, after obtaining the permanent ID of the first AIoT device or the temporary ID of the first AIoT device, the AIoT NF may further determine whether the first AIoT device is any one of the one or more AIoT devices requested by the first service request message. If the first AIoT device is any one of the one or more AIoT devices requested by the first service request message, the AIoT NF sends, to the AIoT authentication function, an authentication request used to trigger authentication between the AIoT authentication function and the first AIoT device.

For example, the AIoT NF side may obtain the permanent IDs or internal IDs of the one or more AIoT devices in advance based on the first service request message. Correspondingly, whether the first AIoT device is any one of the one or more AIoT devices requested by the first service request message may be determined as follows. In a case where the AIoT NF obtains the decrypted permanent ID of the first AIoT device or the temporary ID of the first AIoT device, it is determined whether the permanent ID of the first AIoT device or the temporary ID of the first AIoT device is included in the permanent IDs or internal IDs of the one or more AIoT devices corresponding to the first service request message. If included, it is determined that the first AIoT device is one of the one or more AIoT devices requested by the first service request message.

In one embodiment, after the AIoT NF receives the first response, the method includes the following. An authentication request is sent to the AIoT authentication function. The authentication request carries the encrypted permanent ID of the first AIoT device. That is, the AIoT NF may not perform decryption.

In one case, the encrypted permanent ID of the first AIoT device is a partially encrypted ID. The AIoT NF may send the authentication request to the AIoT authentication function as follows. The AIoT NF determines a corresponding AIoT authentication function based on the plaintext of the encrypted permanent ID of the first AIoT device, and sends the authentication request to the AIoT authentication function.

The corresponding AIoT authentication function may be determined based on the plaintext of the encrypted permanent ID of the first AIoT device, and the authentication request may be sent to the AIoT authentication function as follows. In a case where the plaintext of the encrypted permanent ID of the first AIoT device matches any one of the one or more AIoT devices in the first service request message, the corresponding AIoT authentication function is determined based on the plaintext of the encrypted permanent ID of the first AIoT device, and the authentication request is sent to the AIoT authentication function.

In one case, the AIoT NF may only address one AIoT authentication function. At this time, the encrypted permanent ID (regardless of whether it is a fully encrypted ID or a partially encrypted ID) of the first AIoT device in the first response is not decrypted, and the encrypted permanent ID of the first AIoT device is directly carried in the authentication request and sent to the AIoT authentication function.

Regardless of whether the encrypted permanent ID of the first AIoT device is the fully encrypted ID or the partially encrypted ID, the AIoT authentication function decrypts the encrypted permanent ID of the first AIoT device in the same way as that in the above embodiments, which will not be repeated herein.

In some possible implementations, after receiving the authentication request, the AIoT authentication function may perform authentication with the first AIoT device. Authentication between the AIoT authentication function and the first AIoT device may include one of: two-way authentication between the AIoT authentication function and the first AIoT device, one-way authentication from the AIoT authentication function to the first AIoT device, or one-way authentication from the first AIoT device to the AIoT authentication function. In some preferred examples, only the one-way authentication from the first AIoT device to the AIoT authentication function may be performed. Specific processing modes of the above various authentications are not limited in this embodiment.

After authentication between the AIoT authentication function and the first AIoT device is completed, the security parameter corresponding to the AIoT device may be derived.

In some embodiments, on the AIoT authentication function side, the method further includes the following. A security parameter corresponding to the first AIoT device is obtained. The security parameter corresponding to the first AIoT device includes at least one of: a first key between the first AIoT device and the AIoT authentication function, a second key between the first AIoT device and the AIoT NF, a third key between the first AIoT device and the reader, or a fourth key between the first AIoT device and an AF of a service function.

The AIoT authentication function may obtain the security parameter corresponding to the first AIoT device in either of the following modes. The security parameter corresponding to the first AIoT device is obtained based on the root key corresponding to the first AIoT device. The security parameter corresponding to the first AIoT device is obtained from the AIoT KMF.

In one embodiment, based on the root key corresponding to the first AIoT device, the security parameter corresponding to the first AIoT device may be obtained after authentication between the AIoT authentication function and the first AIoT device is completed (preferably), or may be obtained during a procedure of performing authentication with the first AIoT device.

In one example, the security parameter corresponding to the first AIoT device may be obtained based on the root key corresponding to the first AIoT device as follows. At least one of the first key, the second key, the third key, or the fourth key is derived based on the root key corresponding to the first AIoT device.

Optionally, the first key may be derived based on the root key corresponding to the first AIoT device as follows. The first key is derived based on the root key corresponding to the first AIoT device and a first key generation parameter. Alternatively, an intermediate key is derived based on the root key corresponding to the first AIoT device, and the first key is derived based on the intermediate key and the first key generation parameter.

The intermediate key may include a ciphering key (CK) and/or an integrity key (IK). A mode of deriving the intermediate key is not limited in this embodiment. A computation mode of deriving the first key based on the intermediate key and the first key generation parameter is not limited in this example.

The first key generation parameter may include the ID of the first AIoT device and an AIoT authentication function ID. The ID of the first AIoT device may be the permanent ID of the first AIoT device. Alternatively, the ID of the first AIoT device may be obtained based on the authentication request, for example, if the authentication request carries a permanent ID, the permanent ID of the first AIoT device may be used; if the authentication request carries a temporary ID, the temporary ID of the first AIoT device may be used. Provided that an ID and an ID type used on the first AIoT device side are the same as an ID and an ID type used by the AIoT authentication function, it shall fall within the protection scope of this embodiment.

The first key generation parameter may further include at least one of a first random number, a first count value, etc. The first random number may be generated by the first AIoT device and transmitted to the AIoT authentication function through a message during the authentication procedure, or may be generated by the AIoT authentication function and transmitted to the first AIoT device through a message during the authentication procedure. The first count value may be two identical values obtained by the first AIoT device and the AIoT authentication function respectively. For example, the first AIoT device and the AIoT authentication function may configure a counter corresponding to the first AIoT device, and the first AIoT device and the AIoT authentication function respectively set two identical initial values (for example, may be 0). Each time a processing of deriving the security parameter (or obtaining a key by performing computation, or performing encryption computation, or performing computation, etc.) is performed, both the first AIoT device and the AIoT authentication function increment their respective count values by one, to ensure that the first AIoT device and the AIoT authentication function use identical count values.

Optionally, the second key may be derived based on the root key corresponding to the first AIoT device as follows. The second key is derived based on the root key corresponding to the first AIoT device and a second key generation parameter. Alternatively, an intermediate key is derived based on the root key corresponding to the first AIoT device, and the second key is derived based on the intermediate key and the second key generation parameter.

The second key generation parameter may at least include the ID of the first AIoT device and an AIoT NF ID. Furthermore, the second key generation parameter may further include at least one of a second random number, a second count value, etc. The second random number and the first random number may be the same or different, and a mode of obtaining or configuring the second random number is the same as a mode of obtaining the first random number. The second count value and the first count value may be the same or different, and a mode of determining the second count value is similar to a mode of determining the first count value. Provided that the first AIoT device and the AIoT authentication function use the same second random number and/or the same second count value, it shall fall within the protection scope of this embodiment.

Optionally, the third key may be derived based on the root key corresponding to the first AIoT device as follows. The third key is derived based on the root key corresponding to the first AIoT device and a third key generation parameter. Alternatively, an intermediate key is derived based on the root key corresponding to the first AIoT device, and the third key is derived based on the intermediate key and the third key generation parameter.

The third key generation parameter may at least include the ID of the first AIoT device and a reader ID. Furthermore, the third key generation parameter may further include at least one of a third random number, a third count value, etc. The relevant illustration of the third random number is the same as those of the second random number and the first random number in the above embodiments, and the third count value is the same as the illustrations of the first count value and the second count value in the above embodiments, which will not be repeated herein.

Optionally, the fourth key may be derived based on the root key corresponding to the first AIoT device as follows. The fourth key is derived based on the root key corresponding to the first AIoT device and a fourth key generation parameter. Alternatively, an intermediate key is derived based on the root key corresponding to the first AIoT device, and the fourth key is derived based on the intermediate key and the fourth key generation parameter.

The fourth key generation parameter may at least include the ID of the first AIoT device and an AF ID. Furthermore, the fourth key generation parameter may further include at least one of a fourth random number, a fourth count value, etc. The relevant illustration of the fourth random number is the same as the relevant illustration of each of the random numbers in the above embodiments, and the relevant illustration of the fourth count value is the same as the relevant illustration of each of the count values in the above embodiments, which will not be repeated herein.

In one example, the security parameter corresponding to the first AIoT device may be obtained based on the root key corresponding to the first AIoT device as follows. The first key is obtained based on the root key corresponding to the first AIoT device. At least one of the second key, the third key, or the fourth key, is derived based on the first key.

The first key may be obtained based on the root key corresponding to the first AIoT device in either of the following modes. The root key corresponding to the first AIoT device is directly taken as the first key. The first key is derived based on the root key corresponding to the first AIoT device and the first key generation parameter. An intermediate key is derived based on the root key corresponding to the first AIoT device, and the first key is derived based on the intermediate key and the first key generation parameter. The above processing modes are the same as those in the above embodiments, which will not be repeated herein.

The second key may be derived based on the first key as follows. The second key is derived based on the first key and the second key generation parameter. The third key may be derived based on the first key as follows. The third key is derived based on the first key and the third key generation parameter. The fourth key may be derived based on the first key as follows. The fourth key is derived based on the first key and the fourth key generation parameter.

It may be understood that, the above is merely for exemplary illustration of the first key generation parameter to the fourth key generation parameter. In actual processing, the above various key generation parameters may also include the same or different other parameters, which are not enumerated or limited herein.

It may also be noted that, the key algorithm used for deriving the first key to the fourth key may be configured according to actual situations, for example, may be an advanced encryption standard (AES) algorithm to derive the key, for example, a 128-bit string obtained by using AES-128 for computation may be used as the key.

In one example, the AIoT authentication function may obtain the security parameter corresponding to the first AIoT device as follows. The AIoT authentication function obtains the security parameter corresponding to the first AIoT device from the AIoT KMF.

For example, the AIoT authentication function may, when authentication with the first AIoT device is completed (or during the procedure of performing authentication with the first AIoT device), trigger the AIoT KMF to perform the processing of deriving the security parameter corresponding to the first AIoT device, and receive the security parameter corresponding to the first AIoT device from the AIoT KMF.

The AIoT KMF may be a function newly added in the 5GC, for example, may be disposed in a newly added network element. Alternatively, the AIoT KMF may also be implemented as any one of the following functions: an authentication server function (AUSF), a security anchor function (SEAF), or an access and mobility management function (AMF). The specific implementation of the AIoT KMF is not enumerated or limited in this embodiment.

The AIoT authentication function and the AIoT KMF may be disposed in the same core network device, for example, both may be disposed in the first core network device or the second core network device. Alternatively, the AIoT authentication function and the AIoT KMF are respectively disposed in different core network devices. For example, the AIoT KMF is disposed in a third core network device, and the AIoT authentication function may be disposed in the first core network device or the second core network device.

The processing for the AIoT KMF to derive each key in the security parameter corresponding to the first AIoT device is the same as the specific processing for the AIoT authentication function to derive each key in the security parameter corresponding to the first AIoT device, which will not be repeated herein.

With reference to FIG. 7, for example, the AIoT KMF is the AUSF, a shared key K_{AUSF} (i.e., a first key) between the AUSF and the first AIoT device is first derived, and subordinate keys of K_{AIoT-UE/gNB} (i.e., a third key, and the reader may be a UE or a gNB), K_{AIoT-AIoTF} (i.e., a second key), and K_{AIoT-AF} (i.e., a fourth key) may be derived from K_{AUSF}. In addition, it can also be seen in FIG. 7 that, the AUSF may first derive the CK and/or the IK based on the K, and then derive K_{AUSF} based on the CK and/or the IK. Furthermore, the AUSF may derive the AK based on the K. Specific modes of generating the above various keys are the same as those in the above embodiments, which will not be repeated herein.

In some embodiments, on the first AIoT device side, the method further includes the following. The security parameter corresponding to the first AIoT device is obtained based on the root key corresponding to the first AIoT device. The security parameter corresponding to the first AIoT device includes at least one of: the first key between the first AIoT device and the AIoT authentication function, the second key between the first AIoT device and the AIoT NF, the third key between the first AIoT device and the reader, or the fourth key between the first AIoT device and the AF of a service function.

The first AIoT device may obtain the security parameter corresponding to the first AIoT device after authentication with the AIoT authentication function is completed or during the procedure of performing authentication with the AIoT authentication function.

Optionally, the security parameter corresponding to the first AIoT device is obtained based on the root key corresponding to the first AIoT device as follows. The first key is obtained based on the root key corresponding to the first AIoT device, and at least one of the second key, the third key, or the fourth key, is derived based on the first key.

A processing mode for the first AIoT device to obtain each key in the security parameter corresponding to the first AIoT device shall be the same as the processing mode for the AIoT authentication function (or the AIoT KMF) side to obtain each key in the security parameter corresponding to the first AIoT device, which will not be described in detail.

In some possible implementations, on the AIoT authentication function and the first AIoT device side, the method further includes the following. The security context of the first AIoT device is generated or updated based on the security parameter corresponding to the first AIoT device.

Optionally, the first request may be for initial paging of the first AIoT device or initial discovery of the first AIoT device. Correspondingly, the security context of the first AIoT device may be initially generated. On the AIoT authentication function side and the first AIoT device side, the security parameter corresponding to the first AIoT device may be added to the security context of the first AIoT device. In addition, the security context of the first AIoT device may further include other parameters besides the security parameter corresponding to the first AIoT device. Possible types of the other parameters or modes of generating the other parameters are not limited or enumerated herein.

Optionally, the first request may be used for registration update, or security parameter update, or key update, or re-authentication with the first AIoT device. Correspondingly, the security context of the first AIoT device may be updated. On the AIoT authentication function side and the first AIoT device side, an initial security parameter of the first AIoT device in the security context of the first AIoT device may be deleted, and replaced with the security parameter corresponding to the first AIoT device generated currently for storage in the security context of the first AIoT device. In addition, whether other parameters included in the security context of the first AIoT device are updated is not limited in this embodiment.

In some possible embodiments, after the AIoT authentication function generates or updates the security context of the first AIoT device, the method further includes at least one of: sending the second key to the AIoT NF, sending the security context ID of the first AIoT device to the AIoT NF, sending the security context of the first AIoT device to the AIoT NF, sending the third key to a reader corresponding to the first AIoT device, sending the fourth key to the AF, or sending the security context ID of the first AIoT device to the first AIoT device.

On the AIoT NF side, the method further includes at least one of: receiving the second key between the first AIoT device and the AIoT NF from the AIoT authentication function, receiving the security context ID of the first AIoT device from the AIoT authentication function, or receiving the security context of the first AIoT device from the AIoT authentication function. The security context of the first AIoT device includes the security parameter corresponding to the first AIoT device, and the security parameter corresponding to the first AIoT device includes at least one of: the first key between the first AIoT device and the AIoT authentication function, the second key between the first AIoT device and the AIoT NF, or the third key between the first AIoT device and the reader.

In one case, the AIoT NF receives the second key from the AIoT authentication function and saves the second key locally. The next time the AIoT NF needs to determine whether the security context of the first AIoT device is present or is available, the AIoT NF may request the AIoT authentication function and obtain a corresponding result.

In one case, the AIoT NF receives the security context ID of the first AIoT device from the AIoT authentication function and saves the ID locally. When the AIoT NF needs to use the second key between the AIoT NF and the first AIoT device, the AIoT NF may obtain the second key from the AIoT authentication function.

In one case, the AIoT NF receives the security context ID of the first AIoT device and the second key from the AIoT authentication function, and saves them locally.

In one case, the AIoT NF may receive, from the AIoT authentication function, the security context of the first AIoT device and the security context ID of the first AIoT device, and may save them locally. The AIoT NF may directly determine whether the security context is available based on a locally-saved content and directly extract the second key from the security context.

The above is merely for exemplary illustration, and all the content that may be received by the AIoT NF is not enumerated or limited herein.

The AIoT NF may further generate the updated temporary ID of the first AIoT device (during the authentication procedure, or after authentication is completed, or after obtaining at least one of the above content sent by the AIoT authentication function). The processing performed by the AIoT NF may further include the following. The AIoT NF sends the temporary ID of the first AIoT device and the permanent ID of the first AIoT device to the reader corresponding to the first AIoT device. Correspondingly, the processing performed by the reader may further include the following. The reader receives the temporary ID of the first AIoT device and the permanent ID of the first AIoT device from the AIoT NF, and saves the temporary ID of the first AIoT device and the permanent ID of the first AIoT device in association.

In one embodiment, the processing performed by the first AIoT device further includes the following. The first AIoT device receives the security context ID of the first AIoT device.

In one case, the security context ID of the first AIoT device may be sent by the AIoT NF. For example, after the AIoT NF side receives the security context ID of the first AIoT device, the method further includes the following. The security context ID of the first AIoT device is sent to the first AIoT device.

In one case, the security context ID of the first AIoT device may be sent by the AIoT authentication function.

In one case, the security context ID of the first AIoT device may be sent by the AIoT KMF. For example, after generating or updating the security context of the first AIoT device, the AIoT KMF may send the security context ID of the first AIoT device to the first AIoT device.

In some possible implementations, the processing performed by the AIoT NF may further include the following. The AIoT NF sends a second request. The second request carries DL data corresponding to the first AIoT device securely protected based on the security parameter corresponding to the first AIoT device in the security context of the first AIoT device.

The AIoT NF may send the second request as follows. After receiving the first service request message, in a case where the available security context of the first AIoT device is found, the AIoT NF sends the second request. In this case, since the AIoT NF can find the security context of the first AIoT device, the AIoT NF may directly send the second request to the first AIoT device after receiving the first service request message.

Alternatively, the AIoT NF may send the second request as follows. After receiving the first service request message, and at least receiving the second key (or the security context of the first AIoT device) from the AIoT authentication function, the AIoT NF sends the second request.

A mode of sending the second request is similar to the mode of sending the first request in the above embodiments, which will not be repeated herein.

The security protection may include encryption (encryption processing) and/or integrity protection (or integrity protection processing).

Optionally, the second request may carry: a first integrity protection check code obtained by performing integrity protection computation on the DL data corresponding to the first AIoT device based on the second key, , and DL data (i.e., DL plaintext data or DL service data).

Optionally, the second request may carry DL ciphertext data obtained by performing encryption computation on the DL data corresponding to the first AIoT device based on the second key.

Optionally, the second request may carry the DL ciphertext data, and the first integrity protection check code obtained by performing integrity protection computation on the DL ciphertext data based on the second key.

The second key may be directly used as an integrity key for computation to obtain the first integrity protection check code, and/or directly used as a confidentiality key for computation to obtain the DL ciphertext data; and/or, the second key may also be used to derive an integrity key and/or a confidentiality key between the first AIoT device and the AIoT NF, and then the first integrity protection check code is obtained by performing computation based on the derived integrity key, and the DL ciphertext data is obtained by performing computation based on the derived confidentiality key.

A mode for the above integrity protection computation is not limited in this embodiment. The specific algorithm for encryption computation is not limited in this embodiment.

Furthermore, the second request may further carry at least one of: a temporary ID of the first AIoT device, a permanent ID of the first AIoT device securely protected based on the security parameter corresponding to the first AIoT device, information related to a group in which the first AIoT device is located, information related to an area in which the first AIoT device is located, a security context ID of the first AIoT device, or a key ID. The key ID is used, by the first AIoT device, to determine a key for security protection from the security parameter corresponding to the first AIoT device.

Preferably, the second request may carry the temporary ID of the first AIoT device, i.e., a temporary ID currently used by the first AIoT device.

Optionally, in a case where the AIoT NF updates the temporary ID of the first AIoT device this time, the second request may carry an updated temporary ID of the first AIoT device securely protected based on the security parameter corresponding to the first AIoT device. For example, the AIoT NF may perform security protection on the updated temporary ID of the first AIoT device together with the DL data corresponding to the first AIoT device, that is, in the above processing of obtaining the first integrity protection check code and/or the DL ciphertext data by performing computation, the computation may be performed using the DL data corresponding to the first AIoT device and the updated temporary ID of the first AIoT device together. Alternatively, the AIoT NF may obtain a new integrity protection check code and/or new ciphertext data by performing computation on the updated temporary ID of the first AIoT device. A mode for obtaining the check code and the ciphertext data by performing computation is similar to that in the above embodiments, which will not be repeated herein.

Optionally, the second request may further carry the permanent ID of the first AIoT device securely protected based on the security parameter corresponding to the first AIoT device. For example, the AIoT NF may perform security protection on the permanent ID of the first AIoT device together with the DL data corresponding to the first AIoT device, that is, in the above processing of obtaining the first integrity protection check code and/or the DL ciphertext data by performing computation, the computation may be performed using the DL data corresponding to the first AIoT device and the permanent ID of the first AIoT device together. Alternatively, the AIoT NF may separately obtain a new integrity protection check code and/or new ciphertext data by performing computation on the permanent ID of the first AIoT device. A mode of obtaining the check code and the ciphertext data by performing computation is similar to that in the above embodiments, which will not be repeated herein.

Optionally, when DL data needs to be sent to multiple AIoT devices in the same group as the first AIoT device, the second request may carry the information related to a group in which the first AIoT device is located; and when DL data needs to be sent to multiple AIoT devices in the same area as the first AIoT device, the second request may carry the information related to an area in which the first AIoT device is located.

The security context ID of the first AIoT device may enable the first AIoT device to determine a security context currently used by the AIoT NF side.

It may be noted that, the first service request message may refer to any service request message sent by the AF to the AIoT NF (or sent by the AF to the AIoT NF through the NEF). The processing performed on each service request message sent by the AF to the AIoT NF is similar to the processing corresponding to the first service request message, which will not be enumerated for the sake of brevity.

On the first AIoT device side, the method further includes the following. A second request is received. The second request carries DL data securely protected based on the security parameter corresponding to the first AIoT device.

The first AIoT device may perform integrity protection verification and/or decryption on securely protected DL data.

Optionally, the second request may carry the first integrity protection check code and the DL data. The processing performed by the first AIoT device further includes the following. The first AIoT device obtains a first integrity protection verification code by performing computation based on the second key in the security parameter corresponding to the first AIoT device and the DL data. The first AIoT device performs integrity verification on the the second request based on the first integrity protection verification code and the first integrity protection check code.

Optionally, the second request may carry the DL ciphertext data. The processing performed by the first AIoT device further includes the following. The first AIoT device obtains the DL data by performing decryption on the DL ciphertext data based on the second key in the security parameter corresponding to the first AIoT device. The algorithm for decryption computation is not limited in this embodiment, and shall fall within the protection scope of this embodiment provided that the algorithm for decryption computation corresponds to the algorithm for encryption computation.

Optionally, the second request may carry the DL ciphertext data and the first integrity protection check code. The processing performed by the first AIoT device further includes the following. The first AIoT device obtains the first integrity protection verification code by performing computation based on the second key in the security parameter corresponding to the first AIoT device and the DL ciphertext data. The first AIoT device determines that integrity verification on the second request is passed in a case where the first integrity protection verification code is consistent with the first integrity protection check code. The first AIoT device performs decryption on the DL ciphertext data based on the second key to obtain the DL data.

Integrity verification may be performed on the second request based on the first integrity protection verification code and the first integrity protection check code as follows. In a case where the first integrity protection verification code is consistent with the first integrity protection check code, it is determined that integrity verification on the second request is passed; and/or, in a case where the first integrity protection verification code is inconsistent with the first integrity protection check code, it is determined that integrity verification on the second request is failed. Furthermore, in a case where it is determined that integrity verification on the second request is passed, the first AIoT device may extract the DL data.

In a case where the second request carries the security context ID of the first AIoT device and/or the key ID, the first AIoT device may determine a second key based on the security context ID of the first AIoT device and/or the key ID. In a case where the second request does not carry the security context ID of the first AIoT device and/or the key ID, the first AIoT device may use, by default, a second key in a currently saved security context.

The first AIoT device may directly take the second key as the integrity key and/or the confidentiality key, and/or may also derive, based on the second key, the integrity key and/or the confidentiality key between the first AIoT device and the AIoT NF, and then obtain the first integrity protection verification code by performing computation based on the integrity key, and perform decryption based on the confidentiality key. A computation mode such as deriving the integrity key is not limited herein, and shall fall within the protection scope of this embodiment provided that the key used by the first AIoT device is consistent with that of the AIoT NF.

In a case where the second request carries the temporary ID of the first AIoT device, the first AIoT device may first extract the temporary ID of the first AIoT device. If the temporary ID of the first AIoT device is the updated temporary ID of the first AIoT device, the first AIoT device saves the updated temporary ID of the first AIoT device, and then performs integrity protection verification and/or decryption. Alternatively, the first AIoT device may perform integrity protection verification and/or decryption in a case where the second request carries the information related to a group in which the first AIoT device is located or the information related to an area in which the first AIoT device is located.

In a case where the second request carries the permanent ID of the first AIoT device securely protected based on the security parameter corresponding to the first AIoT device, integrity protection verification and/or decryption may be performed on the securely protected permanent ID of the first AIoT device. The processing of performing integrity protection verification and/or decryption is similar to the above related processing of the DL data, which will not be repeated herein.

In some embodiments, the processing performed by the first AIoT device further includes the following. The first AIoT device sends a second response. The second response carries UL data securely protected based on the security parameter corresponding to the first AIoT device.

The UL data may include content fed back by the first AIoT device in response to a command contained in the received DL data. Specifically, the UL data may include one of: the permanent ID of the first AIoT device, data content read by the first AIoT device, or a result of performing data writing by the first AIoT device. The permanent ID of the first AIoT device may be content fed back by the AIoT device in response to an inventory message contained in the DL data. The data content read by the first AIoT device may be data content (for example, may include sensing data, etc.) fed back by the AIoT device performing a read command contained in the DL data. The result of performing data writing by the first AIoT device may be a result (for example, writing completed or writing failed, etc.) fed back by the first AIoT device performing a write command contained in the DL data.

Optionally, the second response may carry a second integrity protection check code obtained by performing integrity protection computation on the UL data based on the second key and the UL data (i.e., UL plaintext data). A mode for integrity protection computation is not limited herein. The second key can be used directly or can be used to derive the integrity key, which will not be repeated herein.

Optionally, the second response may carry UL ciphertext data obtained by performing encryption computation on the UL data based on the second key. The specific algorithm for encryption computation is not limited in this embodiment. The second key can be used directly or can be used to derive the confidentiality key, which will not be repeated herein.

Optionally, the second response may carry the UL ciphertext data obtained by performing encryption computation on the UL data based on the second key, and the second integrity protection check code obtained by performing integrity protection computation on the UL ciphertext data based on the second key.

The second response may further carry at least one of: the temporary ID of the first AIoT device or the permanent ID of the first AIoT device securely protected based on the security parameter corresponding to the first AIoT device.

Preferably, the second response may carry the temporary ID of the first AIoT device, that is, the temporary ID currently used by the first AIoT device. For example, in a case where the updated temporary ID of the first AIoT device is received through the second request this time, the second response may carry the updated temporary ID of the first AIoT device.

Optionally, the second response may further carry the permanent ID of the first AIoT device securely protected based on the security parameter corresponding to the first AIoT device. The relevant illustration of the securely protected permanent ID of the second response is similar to the relevant illustration of the securely protected permanent ID carried by the second request, which will not be repeated herein.

In some embodiments, the processing performed by the AIoT NF further includes the following. The AIoT NF receives a second response. The second response carries UL data that is securely protected based on the security parameter corresponding to the first AIoT device.

Optionally, the second response may carry the second integrity protection check code and the UL data. The processing performed by the AIoT NF may include the following. The AIoT NF obtains a second integrity protection verification code by performing computation based on the second key in the security parameter corresponding to the first AIoT device and the UL data. The AIoT NF performs integrity verification on the second response based on the second integrity protection verification code and the second integrity protection check code.

Optionally, the second response may carry the UL ciphertext data. The processing performed by the AIoT NF includes the following. The AIoT NF obtains the UL data by performing decryption on the UL ciphertext data based on the second key in the security parameter corresponding to the first AIoT device. The algorithm for decryption computation is not limited in this embodiment, and shall fall within the protection scope of this embodiment provided that the algorithm for decryption computation corresponds to the algorithm for encryption computation.

Optionally, the second message may carry the UL ciphertext data and the second integrity protection check code. The processing performed by the AIoT NF further includes the following. The AIoT NF obtains a second integrity protection verification code by performing computation based on the second key in the security parameter corresponding to the first AIoT device and the UL ciphertext data. The AIoT NF determines that integrity verification on the second response is passed in a case where the second integrity protection verification code is consistent with the second integrity protection check code. The AIoT NF performs decryption on the UL ciphertext data based on the second key to obtain the UL data.

The relevant illustration of the second key is similar to that in the above embodiments, which will not be repeated herein.

Integrity verification may be performed on the second response based on the second integrity protection verification code and the second integrity protection check code as follows. In a case where the second integrity protection verification code is consistent with the second integrity protection check code, it is determined that the second response integrity verification is passed; and/or, in a case where the second integrity protection verification code is inconsistent with the second integrity protection check code, it is determined that integrity verification on the second response is failed. Furthermore, in a case where it is determined that integrity verification on the second response is passed, the AIoT NF may extract the UL data.

In a case where the second response carries the temporary ID of the first AIoT device, the AIoT NF may first extract the temporary ID of the first AIoT device. If the temporary ID of the first AIoT device is the previous-updated (or the latest-updated) temporary ID of the first AIoT device, the integrity protection verification and/or decryption is performed on the UL data.

In a case where the second response carries the permanent ID of the first AIoT device securely protected based on the security parameter corresponding to the first AIoT device, the

AIoT NF performs integrity protection verification and/or decryption based on the second key in the security parameter corresponding to the first AIoT device. This specific processing is similar to the above processing of integrity protection verification and/or decryption performed on the UL data, which will not be repeated herein.

After the AIoT NF obtains the UL data, the method may further include the following. The UL data of the first AIoT device is sent to the AF.

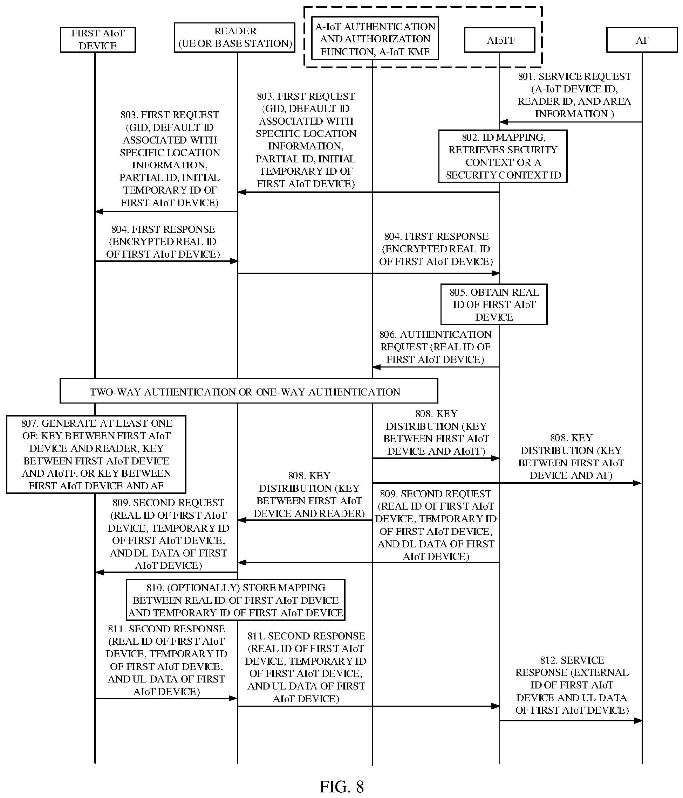

With reference to FIG. 8, an exemplary illustration of a communication method provided by embodiments of the disclosure is provided.

In step 801, an AF initiates a service request (i.e., a first service request message) to a core network element AIoTF. The message may include IDs of one or more AIoT devices (which may be external IDs of AIoT devices), a reader ID (which may be an external reader ID) (a reader may be a UE or a base station), and area information (Area Info). The AF directly sends the service request to the AIoTF, or the AF sends the service request to the AIoTF through an NEF.

In step 802, the AIoTF (or the NEF) performs ID mapping to obtain internal IDs of the one or more AIoT devices. The AIoTF retrieves a security context or a security context ID of a corresponding AIoT device based on an internal ID of each of the AIoT devices. Through ID mapping, the external reader ID may be converted into an internal reader ID.

If the AIoTF does not retrieve the security context of a certain AIoT device (taking a first AIoT device as an example), a requested first AIoT device may not complete an authentication procedure, and the AIoTF further performs step 803. If the retrieved security context of the first AIoT device is unavailable, for example, an authentication result in the security context is expired, such situation means that transmitted messages cannot be protected by the current security context of the first AIoT device before a new security channel is established, and the AIoTF further performs step 803. If the AIoTF retrieves the security context of the first AIoT device, or the retrieved security context of the first AIoT device is available, the AIoTF further performs step 809.

In step 803, the AIoTF establishes a connection with the requested first AIoT device through the reader, and sends a first request to the first AIoT device through the reader. When the reader is a base station, the first request may be a paging message; and when the reader is a UE, the first request may be a discovery message.

In this step, to avoid transmitting a permanent AIoT device ID in an air interface, the following method can be performed.

Method 1: The first request (or referred to as a DL message) includes at least one of a GID, a default ID associated with specific location information (hereinafter referred to as a "default ID"), or a partial ID (a partial permanent ID of the first AIoT device). These can be used to wake up multiple AIoT devices that meet conditions.

Method 2: The first request includes an initial temporary ID of the first AIoT device. The initial temporary ID is pre-saved in the first AIoT device and the network side, and is only used for an initial network DL paging message or an initial network discovery message. After the first AIoT device establishes a security connection with the network, the network may allocate a new temporary ID to the AIoT device for subsequent network paging of devices or network discovery of devices.

In step 804, when the first AIoT device determines to respond to the first request, the first AIoT device sends a first response to the AIoTF through the reader. The first response may carry an encrypted real ID of the first AIoT device (or a temporary ID of the first AIoT device). In this way, it can be ensured that the real ID of the first AIoT device is not transmitted in plaintext. When the reader is a base station, the first response may be a paging response; when the reader is a UE, the first response may be a discovery response.

Method 1: If the first request carries at least one of a GID, a default ID, or a partial ID, the first AIoT device responds to the first request when a condition is met. The satisfied condition may be at least one of: a GID of the first AIoT device matches the GID, an area where the first AIoT device is located matches the default ID, or a permanent ID of the first AIoT device includes the above partial ID. In addition, one or more other AIoT devices may meet the condition, and the other one or more AIoT devices may all respond to the first request.

Method 2: If the first request carries an initial temporary ID of the first request, the first AIoT device may respond to the first request.

In step 805, the AIoTF obtains a plaintext of the real ID of the first AIoT device based on the first response. Furthermore, the AIOTF may also verify whether the device is the device requested by the AF based on the real ID of the first AIoT device. If yes, step 806 is performed; otherwise, the processing is terminated.

In step 806, the AIoTF sends an authentication request of the first AIoT device to an AIoT authentication and authorization function (possibly an AUSF, a UDM, or other core network elements). The authentication request may carry the real ID of the first AIoT device. Step 806 is performed to trigger an authentication and authorization procedure of the first AIoT device.

Two-way authentication or one-way authentication is performed between the AIoT authentication and authorization function and the first AIoT device.

In step 807, after Two-way authentication or one-way authentication, the first AIoT device and an AIoT KMF negotiate a key. The first AIoT device may generate at least one of: a key between the first AIoT device and the reader, a key between the first AIoT device and the AIoTF, or a key between the first AIoT device and the AF.

In step 808, the AIoT authentication and authorization function performs key distribution, which may include at least one of: the key between the first AIoT device and the reader is sent to the reader, the key between the first AIoT device and the AIoTF is sent to the AIoTF, or the key between the first AIoT device and the AF is sent to the AF.

In step 809, the AIoTF sends a second request to the first AIoT device through the reader. The second request may carry the real ID of the first AIoT device, the temporary ID of the first AIoT device, and DL data of the first AIoT device. The DL data may be securely protected based on a security context of the first AIoT device.

In step 810 (optionally), the reader stores a mapping between the real ID of the first AIoT device and the temporary ID of the first AIoT device. That is, the AIoTF sends the real ID of the first AIoT device and the temporary ID of the first AIoT device to the reader, so that the reader can understand the mapping between the real ID of the first AIoT device and the temporary ID of the first AIoT device.

The AIoTF may send the real ID of the first AIoT device and the temporary ID of the first AIoT device to the reader at other timings, which is not limited or enumerated herein.

The AIoTF may also send a temporary ID allocated for the first AIoT device to the first AIoT device. The AIoTF may send the temporary ID allocated for the first AIoT device to the first AIoT device during performing step 803, or while performing step 807 or after performing step 807, or after performing step 808. This embodiment does not limit or enumerate a timing for the AIoTF to send the temporary ID allocated for the first AIoT device to the first AIoT device.

In step 811, the first AIoT device sends a second response to the AIoTF through the reader. The second response may carry the real ID of the first AIoT device, the temporary ID of the first AIoT device, and UL data of the first AIoT device. The UL data may be securely protected based on a security context of the first AIoT device.

In step 812, the AIoTF sends a service response to the AF. The service response may carry an external ID of the first AIoT device and the UL data of the first AIoT device.

In addition, on the network side (the AIoTF, the AIoT KMF, or the AIoT authentication and authorization function), a security context ID is generated, is sent to the first AIoT device through the security connection, and is stored on the network side, so that the network side can retrieve the security context, determine whether it is necessary to trigger authentication of the first AIoT device, and identify the security context between the network and the first AIoT device.

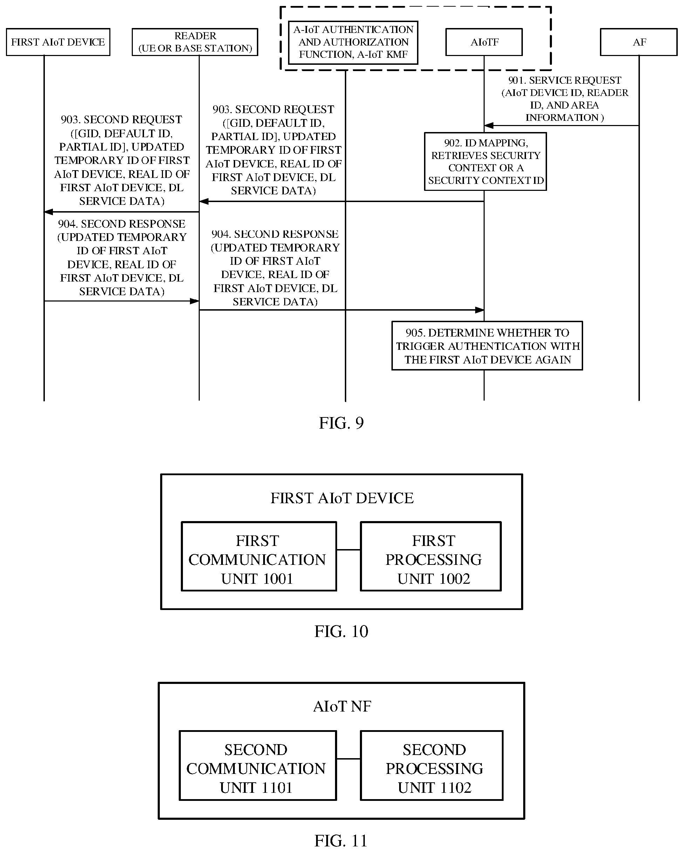

With reference to FIG. 9, another exemplary illustration of a communication method provided by embodiments of the disclosure is provided.

Step 901 to step 902 are the same as step 801 to step 802, which will not be repeated herein.

In step 903, if an AIoTF retrieves an available security context of a first AIoT device, a second request is sent to the first AIoT device through a reader. The second request carries DL service data (or referred to as DL data) protected by the security context. The second request may be one of a paging message, a discovery message, or an AIoT service request.

The AIoTF may use the security context to securely transmit at least one of an updated temporary ID of the first AIoT device or a real ID of the first AIoT device to the first AIoT device; and/or, the AIoTF may wake up multiple AIoT devices by including, in the paging message or the discovery message (a second request), one of a GID, a default ID, or a partial ID.

The paging message or the discovery message (the second request) sent by a network side to the first AIoT device may also include a security context ID or a key ID, so that the first AIoT device can identify a security context being used or a key being used.

In step 904, the first AIoT device finds a corresponding key through the security context ID or the key ID. The first AIoT device obtains the DL service data. The first AIoT device feeds back, according to the service type (command, inventory, etc.), a second response to the AIoTF through the reader. The second response may include protected UL service data (a device ID, or cargo information to be inventoried). The second response may also include at least one of the updated temporary ID of the first AIoT device or the real ID of the first AIoT device.

The AIoTF may send a service response (or referred to as an AIoT service response) to an AF. The service response may carry an external ID of the first AIoT device and UL data.

In step 905, the AIoTF may determine whether to trigger authentication with the first AIoT device again according to a configuration policy. For example, when a key needs to be updated, or when authentication is about to expire, it may be determined that authentication with the first AIoT device needs to be triggered. In a case where it is determined that authentication with the first AIoT device needs to be triggered, step 806 to step 808 in the above embodiments may be performed, which will not be repeated herein.

By adopting the above solutions, when the first AIoT device receives a request requiring ID reporting, the first AIoT device reports a protected ID, so that the AIoT NF on the network side triggers the AIoT authentication function to perform authentication with the first AIoT device. In this way, the authentication procedure can be better adapted to a type of AIoT device that has a lower capability and does not actively send data. In addition, security of privacy information (such as the ID) transmitted by the AIoT device before authentication can also be ensured. Correspondingly, on the AIoT NF side, according to whether the security context of the first AIoT device is available, it is determined whether to initiate authentication with the first AIoT device, and it is determined whether to send the first request to the first AIoT device, so that the authentication procedure can be better adapted to the type of AIoT device that has a lower capability and does not actively send data.

Due to low-power consumption and an ambient power-enabled characteristic of the AIoT device, ID protection during an initial registration procedure is different from that performed by a current terminal. By adopting modes of protecting a temporary AIoT device ID and an encrypted permanent AIoT device ID, the disclosure prevents a permanent AIoT device ID from being exposed or subjected to linkability attacks and traceability attacks. In addition, constrained by power consumption limitation of the AIoT device, the AIoT device cannot support multi-level key derivation and a current key generation algorithm. The disclosure uses an AES-based key generation mode, so that the AIoT device can efficiently derive keys between the AIoT device and the reader, or the core network element, or the AF, to establish a security connection.

FIG. 10 is a schematic structural diagram of a first AIoT device according to an embodiment of the disclosure. The first AIoT device includes a first communication unit 1001. The first communication unit 1001 is configured to receive a first request. The first request is used by the first AIoT device to determine a reporting device ID. The first communication unit 1001 is configured to send a first response. The first response carries a protected ID of the first AIoT device. The first response is used by an AIoT NF to determine to trigger an AIoT authentication function to perform authentication with the first AIoT device.

The first request carries at least one of: a temporary ID of the first AIoT device, information related to a group in which the first AIoT device is located, or information related to an area in which the first AIoT device is located.

The protected ID of the first AIoT device includes: the temporary ID of the first AIoT device, or an encrypted permanent ID of the first AIoT device.

The encrypted permanent ID of the first AIoT device is obtained by performing computation based on an AK and a permanent ID of the first AIoT device. The AK is obtained by performing computation based on a root key corresponding to the first AIoT device.

The first AIoT device further includes a first processing unit 1002. The first processing unit 1002 is configured to obtain a security parameter corresponding to the first AIoT device based on the root key corresponding to the first AIoT device. The security parameter corresponding to the first AIoT device includes at least one of: a first key between the first AIoT device and the AIoT authentication function, a second key between the first AIoT device and the AIoT NF, a third key between the first AIoT device and a reader, or a fourth key between the first AIoT device and an AF of a service function.

The first processing unit is configured to obtain the first key based on the root key corresponding to the first AIoT device. The first processing unit is configured to derive at least one of the following based on the first key: the second key, the third key, or the fourth key.

The first processing unit is configured to generate or update a security context of the first AIoT device based on the security parameter corresponding to the first AIoT device.

The first communication unit is configured to receive a security context ID of the first AIoT device.

The first communication unit is configured to receive a second request. The second request carries DL data securely protected based on the security parameter corresponding to the first AIoT device.

The second request further carries at least one of: the temporary ID of the first AIoT device, a permanent ID of the first AIoT device securely protected based on the security parameter corresponding to the first AIoT device, the information related to a group in which the first AIoT device is located, the information related to an area in which the first AIoT device is located, the security context ID of the first AIoT device, or a key ID. The key ID is used to determine a key for security protection from the security parameter corresponding to the first AIoT device.

The first communication unit is configured to send a second response. The second response carries UL data securely protected based on the security parameter corresponding to the first AIoT device.

The second response further carries at least one of: the temporary ID of the first AIoT device or the permanent ID of the first AIoT device securely protected based on the security parameter corresponding to the first AIoT device.

FIG. 11 is a schematic structural diagram of an AIoT NF according to an embodiment of the disclosure. The AIoT NF includes a second communication unit 1101. The second communication unit 1101 is configured to send a first request. The first request is used by a first AIoT device to determine a reporting device ID. The second communication unit 1101 is configured to receive a first response. The first response carries a protected ID of the first AIoT device. The first response is used to determine to trigger an AIoT authentication function to perform authentication with the first AIoT device.

The first request carries at least one of: a temporary ID of the first AIoT device, information related to a group in which the first AIoT device is located, or information related to an area in which the first AIoT device is located.

The protected ID of the first AIoT device includes: the temporary ID of the first AIoT device or an encrypted permanent ID of the first AIoT device.

The AIoT NF further includes a second processing unit 1102. The second processing unit 1102 is configured to obtain a permanent ID of the first AIoT device by performing computation based on an AK and the encrypted permanent ID of the first AIoT device. The AK is obtained by performing computation based on a root key corresponding to the first AIoT device.

The second communication unit is configured to send the encrypted permanent ID of the first AIoT device. The second communication unit is configured to receive the permanent ID of the first AIoT device.

The second communication unit is configured to send an authentication request to the AIoT authentication function. The authentication request is used to trigger authentication between the AIoT authentication function and the first AIoT device.

The authentication request carries one of: the permanent ID of the first AIoT device, the temporary ID of the first AIoT device, or the encrypted permanent ID of the first AIoT device.

The second communication unit is configured to perform at least one of: receiving a second key between the first AIoT device and the AIoT NF from the AIoT authentication function, receiving a security context ID of the first AIoT device from the AIoT authentication function, or receiving a security context of the first AIoT device from the AIoT authentication function. The security context of the first AIoT device includes a security parameter corresponding to the first AIoT device. The security parameter corresponding to the first AIoT device includes at least one of: a first key between the first AIoT device and the AIoT authentication function, the second key between the first AIoT device and the AIoT NF, or a third key between the first AIoT device and a reader.

The second communication unit is configured to send the temporary ID of the first AIoT device and the permanent ID of the first AIoT device to a reader corresponding to the first AIoT device.

The second communication unit is configured to send the security context ID of the first AIoT device to the first AIoT device.

The second communication unit is configured to receive a first service request message. The first service request message carries DL data corresponding to one or more AIoT devices. The one or more AIoT devices include the first AIoT device.

The second communication unit is configured to send the first request in a case where an available security context of the first AIoT device is not found.

The second communication unit is configured to send the first request in a case where a security context corresponding to the first AIoT device is required to be updated.

The second communication unit is configured to send a second request. The second request carries DL data corresponding to the first AIoT device securely protected based on the security parameter corresponding to the first AIoT device in the security context of the first AIoT device.

The second request further carries at least one of: the temporary ID of the first AIoT device, a permanent ID of the first AIoT device securely protected based on the security parameter corresponding to the first AIoT device, the information related to a group in which the first AIoT device is located, the information related to an area in which the first AIoT device is located, the security context ID of the first AIoT device, or a key ID. The key ID is used by the first AIoT device to determine a key for security protection from the security parameter corresponding to the first AIoT device.

The second communication unit is configured to receive a second response. The second response carries UL data securely protected based on the security parameter corresponding to the first AIoT device.

The second response further carries at least one of: the temporary ID of the first AIoT device or the permanent ID of the first AIoT device securely protected based on the security parameter corresponding to the first AIoT device.

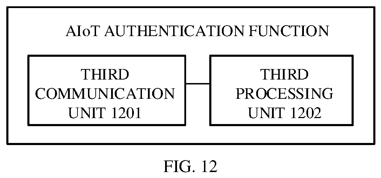

FIG. 12 is a schematic structural diagram of an AIoT authentication function according to an embodiment of the disclosure. The AIoT authentication function includes a third communication unit 1201. The third communication unit 1201 is configured to receive an authentication request from an AIoT network function NF. The authentication request is used to trigger authentication between the AIoT authentication function and a first AIoT device.

The authentication request carries one of: a permanent ID of the first AIoT device, a temporary ID of the first AIoT device, or an encrypted permanent ID of the first AIoT device.

The AIoT authentication function further includes a third processing unit 1202. The third processing unit 1202 is configured to obtain the permanent ID of the first AIoT device by performing computation based on an AK and the encrypted permanent ID of the first AIoT device. The AK is obtained by performing computation based on a root key corresponding to the first AIoT device.

The third processing unit is configured to obtain a security parameter corresponding to the first AIoT device. The security parameter corresponding to the first AIoT device includes at least one of: a first key between the first AIoT device and the AIoT authentication function, a second key between the first AIoT device and the AIoT NF, a third key between the first AIoT device and a reader, or a fourth key between the first AIoT device and an AF of a service function.

The third processing unit is configured to perform one of: obtaining the security parameter corresponding to the first AIoT device based on the root key corresponding to the first AIoT device, or obtaining the security parameter corresponding to the first AIoT device from an AIoT KMF.

The third processing unit is configured to obtain the first key based on the root key corresponding to the first AIoT device. The third processing unit is configured to derive at least one of the following based on the first key: the second key, the third key, or the fourth key.

The third processing unit is configured to generate or update a security context of the first AIoT device based on the security parameter corresponding to the first AIoT device.

The third communication unit is configured to perform at least one of: sending the second key to the AIoT NF, sending a security context ID of the first AIoT device to the AIoT NF, sending the security context of the first AIoT device to the AIoT NF, sending the third key to the reader corresponding to the first AIoT device, sending the fourth key to the AF, or sending the security context ID of the first AIoT device to the first AIoT device.

The devices in embodiments of the disclosure can implement corresponding functions of various devices in the above communication method embodiments. For the procedure, function, implementation, and advantage corresponding to each module (sub-module, unit, or assembly, etc.) in the devices, reference can be made to the corresponding illustrations in the above method embodiments, which will not be repeated herein. It may be noted that, the functions of various modules (sub-modules, units, or assemblies, etc.) in the devices described in embodiments of the disclosure may be implemented by different modules (sub-modules, units, or assemblies, etc.), or may be implemented by the same module (sub-module, unit, or assembly, etc.).

It may be understood that, in various embodiments of the disclosure, the magnitude of a sequence number of each of the above procedures does not imply an order execution. The execution order between the procedures shall be determined according to function and inherent logic thereof. It will be evident to those skilled in the art that, for the sake of convenience and brevity, in terms of the specific working procedures of the above systems, apparatuses, and units, reference can be made to the corresponding procedures in the above method embodiments, which will not be repeated herein. The above elaborations are merely implementations of the disclosure, but are not intended to limit the protection scope of the disclosure. Any variation or replacement easily thought of by those skilled in the art within the technical scope disclosed in the disclosure shall fall within to the protection scope of the disclosure. Therefore, the protection scope of the disclosure shall be subject to the protection scope of the claims.

## Claims

1. A communication method, performed by a first ambient power-enabled internet of things (AIoT) device, comprising:
receiving a first request, wherein the first request is used by the first AIoT device to determine a reporting device identity (ID); and
sending a first response, wherein the first response carries a protected ID of the first AIoT device, and the first response is used by an AIoT network function (NF) to determine to trigger an AIoT authentication function to perform authentication with the first AIoT device.

2. The method of claim 1, wherein the first request carries at least one of: a temporary ID of the first AIoT device, information related to a group in which the first AIoT device is located, or information related to an area in which the first AIoT device is located.

3. The method of claim 1 or 2, wherein the protected ID of the first AIoT device comprises:
a temporary ID of the first AIoT device or an encrypted permanent ID of the first AIoT device.

4. The method of claim 3, wherein the encrypted permanent ID of the first AIoT device is obtained by performing computation based on an anonymous key (AK) and a permanent ID of the first AIoT device, and the AK is obtained by performing computation based on a root key corresponding to the first AIoT device.

5. The method of any one of claims 1 to 4, further comprising:
obtaining a security parameter corresponding to the first AIoT device based on a root key corresponding to the first AIoT device, wherein the security parameter corresponding to the first AIoT device comprises at least one of: a first key between the first AIoT device and the AIoT authentication function, a second key between the first AIoT device and the AIoT NF, a third key between the first AIoT device and a reader, or a fourth key between the first AIoT device and an application function (AF) of a service function.

6. The method of claim 5, wherein obtaining the security parameter corresponding to the first AIoT device based on the root key corresponding to the first AIoT device comprises:
obtaining the first key based on the root key corresponding to the first AIoT device, and deriving at least one of the following based on the first key: the second key, the third key, or the fourth key.

7. The method of claim 5 or 6, further comprising:
generating or updating a security context of the first AIoT device based on the security parameter corresponding to the first AIoT device.

8. The method of claim 7, further comprising:
receiving a security context ID of the first AIoT device.

9. The method of any one of claims 5 to 8, further comprising:
receiving a second request, wherein the second request carries downlink (DL) data securely protected based on the security parameter corresponding to the first AIoT device.

10. The method of claim 9, wherein the second request further carries at least one of: a temporary ID of the first AIoT device, a permanent ID of the first AIoT device securely protected based on the security parameter corresponding to the first AIoT device, information related to a group in which the first AIoT device is located, information related to an area in which the first AIoT device is located, a security context ID of the first AIoT device, or a key ID, wherein the key ID is used to determine a key for security protection from the security parameter corresponding to the first AIoT device.

11. The method of claim 9 or 10, further comprising:
sending a second response, wherein the second response carries uplink (UL) data securely protected based on the security parameter corresponding to the first AIoT device.

12. The method of claim 11, wherein the second response further carries at least one of: a temporary ID of the first AIoT device or a permanent ID of the first AIoT device securely protected based on the security parameter corresponding to the first AIoT device.

13. A communication method, performed by an ambient power-enabled internet of things (AIoT) network function (NF), comprising:
sending a first request, wherein the first request is used by a first AIoT device to determine a reporting device identity (ID); and
receiving a first response, wherein the first response carries a protected ID of the first AIoT device, and the first response is used to determine to trigger an AIoT authentication function to perform authentication with the first AIoT device.

14. The method of claim 13, wherein the first request carries at least one of: a temporary ID of the first AIoT device, information related to a group in which the first AIoT device is located, or information related to an area in which the first AIoT device is located.

15. The method of claim 13 or 14, wherein the protected ID of the first AIoT device comprises: a temporary ID of the first AIoT device or an encrypted permanent ID of the first AIoT device.

16. The method of claim 15, further comprising:
obtaining a permanent ID of the first AIoT device by performing computation based on an anonymous key (AK) and the encrypted permanent ID of the first AIoT device, wherein the AK is obtained by performing computation based on a root key corresponding to the first AIoT device.

17. The method of claim 15, further comprising:
sending the encrypted permanent ID of the first AIoT device; and
receiving a permanent ID of the first AIoT device.

18. The method of any one of claims 15 to 17, further comprising:
sending an authentication request to the AIoT authentication function, wherein the authentication request is used to trigger authentication between the AIoT authentication function and the first AIoT device.

19. The method of claim 18, wherein the authentication request carries one of: a permanent ID of the first AIoT device, the temporary ID of the first AIoT device, or the encrypted permanent ID of the first AIoT device.

20. The method of claim 18 or 19, further comprising at least one of:
receiving a second key between the first AIoT device and the AIoT NF from the AIoT authentication function;
receiving a security context ID of the first AIoT device from the AIoT authentication function; or
receiving a security context of the first AIoT device from the AIoT authentication function, wherein the security context of the first AIoT device comprises a security parameter corresponding to the first AIoT device, and the security parameter corresponding to the first AIoT device comprises at least one of: a first key between the first AIoT device and the AIoT authentication function, the second key between the first AIoT device and the AIoT NF, or a third key between the first AIoT device and a reader.

21. The method of any one of claims 18 to 20, further comprising:
sending the temporary ID of the first AIoT device and a permanent ID of the first AIoT device to a reader corresponding to the first AIoT device.

22. The method of claim 20, further comprising:
sending the security context ID of the first AIoT device to the first AIoT device.

23. The method of any one of claims 13 to 22, further comprising:
receiving a first service request message, wherein the first service request message carries downlink (DL) data corresponding to one or more AIoT devices, and the one or more AIoT devices comprise the first AIoT device.

24. The method of claim 23, further comprising:
sending the first request in response to an available security context of the first AIoT device being not found.

25. The method of any one of claims 13 to 22, further comprising:
sending the first request in response to a security context corresponding to the first AIoT device being required to be updated.

26. The method of claim 23, further comprising:
sending a second request, wherein the second request carries DL data corresponding to the first AIoT device securely protected based on a security parameter corresponding to the first AIoT device in a security context of the first AIoT device.

27. The method of claim 26, wherein the second request further carries at least one of: a temporary ID of the first AIoT device, a permanent ID of the first AIoT device securely protected based on the security parameter corresponding to the first AIoT device, information related to a group in which the first AIoT device is located, information related to an area in which the first AIoT device is located, a security context ID of the first AIoT device, or a key ID, wherein the key ID is used by the first AIoT device to determine a key for security protection from the security parameter corresponding to the first AIoT device.

28. The method of claim 26 or 27, further comprising:
receiving a second response, wherein the second response carries uplink (UL) data securely protected based on the security parameter corresponding to the first AIoT device.

29. The method of claim 28, wherein the second response further carries at least one of: a temporary ID of the first AIoT device or a permanent ID of the first AIoT device securely protected based on the security parameter corresponding to the first AIoT device.

30. A communication method, performed by an ambient power-enabled internet of things (AIoT) authentication function, comprising:
receiving an authentication request from an AIoT network function (NF), wherein the authentication request is used to trigger authentication between the AIoT authentication function and a first AIoT device.

31. The method of claim 30, wherein the authentication request carries one of: a permanent identity (ID) of the first AIoT device, a temporary ID of the first AIoT device, or an encrypted permanent ID of the first AIoT device.

32. The method of claim 31, further comprising:
obtaining the permanent ID of the first AIoT device by performing computation based on an anonymous key (AK) and the encrypted permanent ID of the first AIoT device, wherein the AK is obtained by performing computation based on a root key corresponding to the first AIoT device.

33. The method of any one of claims 30 to 32, further comprising:
obtaining a security parameter corresponding to the first AIoT device, wherein the security parameter corresponding to the first AIoT device comprises at least one of: a first key between the first AIoT device and the AIoT authentication function, a second key between the first AIoT device and the AIoT NF, a third key between the first AIoT device and a reader, or a fourth key between the first AIoT device and an application function (AF) of a service function.

34. The method of claim 33, wherein obtaining the security parameter corresponding to the first AIoT device comprises one of:
obtaining the security parameter corresponding to the first AIoT device based on a root key corresponding to the first AIoT device; or
obtaining the security parameter corresponding to the first AIoT device from an AIoT key management function (KMF).

35. The method of claim 34, wherein obtaining the security parameter corresponding to the first AIoT device based on the root key corresponding to the first AIoT device comprises:
obtaining the first key based on the root key corresponding to the first AIoT device, and deriving at least one of the following based on the first key: the second key, the third key, or the fourth key.

36. The method of any one of claims 33 to 35, further comprising:
generating or updating a security context of the first AIoT device based on the security parameter corresponding to the first AIoT device.

37. The method of any one of claims 33 to 36, further comprising at least one of:
sending the second key to the AIoT NF;
sending a security context ID of the first AIoT device to the AIoT NF;
sending a security context of the first AIoT device to the AIoT NF;
sending the third key to a reader corresponding to the first AIoT device;
sending the fourth key to the AF; or
sending the security context ID of the first AIoT device to the first AIoT device.

38. A first ambient power-enabled internet of things (AIoT) device, comprising:
a first communication unit configured to receive a first request, wherein the first request is used by the first AIoT device to determine a reporting device identity (ID); and to send a first response, wherein the first response carries a protected ID of the first AIoT device, and the first response is used by an AIoT network function (NF) to determine to trigger an AIoT authentication function to perform authentication with the first AIoT device.

39. An ambient power-enabled internet of things (AIoT) network function (NF), comprising:
a second communication unit configured to send a first request, wherein the first request is used by a first AIoT device to determine a reporting device identity (ID); and to receive a first response, wherein the first response carries a protected ID of the first AIoT device, and the first response is used to determine to trigger an AIoT authentication function to perform authentication with the first AIoT device.

40. An ambient power-enabled internet of things (AIoT) authentication function, comprising:
a third communication unit configured to receive an authentication request from an AIoT network function (NF), wherein the authentication request is used to trigger authentication between the AIoT authentication function and a first AIoT device.
